(19) Europäisches Patentamt
European Patent Office
Office européen des brevets

(11) EP 3 053 207 B1

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(21) Anmeldenummer: **14777322.0**

(22) Anmeldetag: **30.09.2014**

(51) Int Cl.:
***H01M 2/10*** *(2006.01)* ***B60L 11/18*** *(2006.01)*
***B60L 3/00*** *(2019.01)* ***B60K 1/04*** *(2019.01)*
***C08L 69/00*** *(2006.01)* *B60K 6/28* *(2007.10)*

(86) Internationale Anmeldenummer:
**PCT/EP2014/070859**

(87) Internationale Veröffentlichungsnummer:
**WO 2015/049215 (09.04.2015 Gazette 2015/14)**

(54) **BATTERIEMODUL MIT AUSWEICHBEREICH, BATTERIEPACK UND ELEKTROFAHRZEUG**

BATTERY MODULE WITH EXTRA AREA, BATTERY PACK AND ELECTRIC VEHICLE

MODULE DE BATTERIE DOTÉE D'UNE SECTION DE SÉCURITÉ, PACK DE BATTERIES ET VÉHICULE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2013 EP 13187020**
**11.10.2013 EP 13188325**

(43) Veröffentlichungstag der Anmeldung:
**10.08.2016 Patentblatt 2016/32**

(73) Patentinhaber: **Covestro Deutschland AG**
**51373 Leverkusen (DE)**

(72) Erfinder:
- **BRAMBRINK, Roland**
**42799 Leichlingen (DE)**
- **GROSSER, Ulrich**
**51515 Kürten (DE)**

(74) Vertreter: **Levpat**
**c/o Covestro AG**
**Gebäude 4825**
**51365 Leverkusen (DE)**

(56) Entgegenhaltungen:
**WO-A2-2010/040363**
**DE-A1-102007 049 358**
**DE-A1-102008 059 973**
**DE-A1-102008 062 903**
**DE-A1-102009 007 422**
**DE-A1-102010 012 998**
**DE-A1-102010 041 387**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Batteriemodul mit einem Batteriemodulgehäuse, wobei das Batteriemodulgehäuse einen Batteriemodulinnenraum umschließt und wobei das Batteriemodulgehäuse Batteriemodulinnenraum-seitig Aufnahmen für eine vorgegebene Anzahl von Batteriezellen aufweist. Weiterhin betrifft die Erfindung ein Batteriepack mit einem Batteriepackgehäuse, wobei das Batteriepackgehäuse einen Batteriepackinnenraum umschließt und wobei das Batteriepackgehäuse Batteriepackinnenraum-seitig mindestens eine Aufnahme für ein Batteriemodul aufweist. Schließlich betrifft die Erfindung noch ein Elektrofahrzeug.

Derartige Batteriemodule und Batteriepacks finden zunehmend Verwendung in Elektrofahrzeugen. Solche Fahrzeuge verfügen über einen Elektromotor, der das Fahrzeug entweder allein oder - bei sogenannten Elektrohybridfahrzeugen - in Kombination mit einem Kraftstoffmotor antreibt, sowie über eine Anzahl von Batteriezellen, um die zum Betrieb des Elektromotors erforderliche Energie zu speichern. Um eine möglichst hohe Fahrleistung erzielen zu können, bevor die Batteriezellen wieder aufgeladen werden müssen, wird üblicherweise eine große Anzahl von Batteriezellen mit einer großen Gesamtkapazität in das Fahrzeug integriert. Unter Batteriezellen werden vorliegend insbesondere aufladbare Batteriezellen, d.h. Akkus verstanden.

Die DE 10 2009 007422 A1 offenbart Batteriemodule, Batteriepacks sowie deren Verwendung in einem Fahrzeug gemäß dem Stand der Technik.

Eine vorgegebene Anzahl von Batteriezellen werden typischerweise zu einem Batteriemodul zusammengefasst, in dem die Batteriezellen von einem Batteriemodulgehäuse umgeben werden. Mehrere solcher Batteriemodule werden weiterhin typischerweise zu einem Batteriepack zusammengefasst, welches dann in ein Elektrofahrzeug eingebaut wird.

Das Bedürfnis nach großem Stauraum bzw. großer möglicher Nutzlast bei gleichzeitig geringem Verbrauch äußert sich bei Elektrofahrzeugen im Bestreben, die Größe und das Gewicht der Batteriezellen bzw. Batteriemodule oder Batteriepacks möglichst gering zu halten. Aus diesem Grund werden bevorzugt Batteriezellen mit einer hohen Energiespeicherdichte verwendet, wie insbesondere Lithiumionenakkus.

Wegen ihrer hohen Energiedichte ergibt sich durch diese Batteriezellen jedoch auch ein Gefährdungspotential für das Fahrzeug. Bei Beschädigung und/oder Kurzschluss einer Batteriezelle, beispielsweise durch einen Crash, kann es zum Austritt einer heißen Flamme aus der Batteriezelle kommen. Eine solche Flamme kann Fahrzeugbrände und sogar Fahrzeugexplosionen hervorrufen. Insbesondere kann die dichte Packung der Batteriezellen innerhalb eines Batteriemoduls dazu führen, dass die Flamme aus einer Batteriezelle andere Batteriezellen ebenfalls beschädigt, so dass es hierdurch gleichsam zu einer Kettenreaktion mit fatalen Folgen für das Fahrzeug und möglicherweise für seine Insassen kommen kann.

Um dieses von den Batteriezellen ausgehende Gefährdungspotential zu reduzieren, werden das Batteriemodulgehäuse um die Batteriezellen und das Batteriepackgehäuse um die Batteriemodulgehäuse im Stand der Technik üblicherweise so starr und robust ausgebildet, dass die Batteriezellen im Falle eines Crashs möglichst unbeschädigt bleiben. Zu diesem Zweck werden die Batteriemodulgehäuse und Batteriepackgehäuse typischerweise aus einem dicken Stahlblech gefertigt, um die Batteriezellen gleichsam in einer Art Panzerschrank vor einem möglichen Crash zu schützen.

Diese Stahlgehäuse haben jedoch den Nachteil, dass sie schwer und teuer sind und damit die Wirtschaftlichkeit des Elektrofahrzeugs herabsetzen. Weiterhin haben sich einige Stahlgehäuse, insbesondere zur Gewichtsoptimierung dünner ausgelegte Stahlgehäuse, als unzureichend erwiesen, um die Batteriezellen bei einem Crash ausreichend zu schützen.

Ausgehend von diesem Stand der Technik liegt der vorliegenden Erfindung die Aufgabe zugrunde, die Betriebssicherheit eines Batteriemoduls, wie zum Beispiel eines Batteriemoduls für ein Elektrofahrzeug, zu verbessern und gleichzeitig die Nachteile eines schweren und teuren Stahlgehäuses zu reduzieren oder zu vermeiden.

Diese Aufgabe wird bei einem Batteriemodul mit einem Batteriemodulgehäuse, wobei das Batteriemodulgehäuse einen Batteriemodulinnenraum umschließt und wobei das Batteriemodulgehäuse Batteriemodulinnenraum-seitig Aufnahmen für eine vorgegebene Anzahl von Batteriezellen aufweist, erfindungsgemäß zumindest teilweise dadurch gelöst, dass das Batteriemodul im Batteriemodulinnenraum zusätzlich zu den Aufnahmen einen Ausweichbereich aufweist, der so dimensioniert und angeordnet ist, dass mindestens eine in einer Aufnahme aufgenommene Batteriezelle zumindest teilweise in den Ausweichbereich verschiebbar ist.

Durch das Vorsehen eines solchen zusätzlichen Ausweichbereichs wird innerhalb des Batteriemodulinnenraums ein Raum zur Verfügung gestellt, in den eine oder mehrere Batteriezellen bei äußerer Krafteinwirkung ausweichen können. Auf diese Weise kann die maximale Krafteinwirkung auf einzelne Batteriezellen reduziert werden, so dass die Gefahr einer starken Beschädigung der Batteriezellen herabgesetzt wird.

Die Integration eines Ausweichbereichs im Batteriemodul hat den Vorteil, dass unabhängig von den Gegebenheiten außerhalb des Batteriemoduls ein Ausweichbereich für die Batteriezellen zur Verfügung steht. Auf diese Weise kann das Batteriemodul in einem Batteriepack bzw. in einem Elektrofahrzeug verbaut werden, ohne dass in der Umgebung des Batteriemoduls besondere Freiräume erforderlich sind, um ein Ausweichen des Batteriemoduls bzw. von im

Batteriemodul angeordneten Batteriezellen zu ermöglichen.

Beim erfindungsgemäßen Batteriemodul weist das Batteriemodulgehäuse Batteriemodulinnenraum-seitig, d.h. auf der Innenseite des Batteriemodulgehäuses, Aufnahmen für eine vorgegebene Anzahl von Batteriezellen auf.

Batteriemodule, insbesondere Batteriemodule für Elektrofahrzeuge, weisen üblicherweise eine vorgegebene Anzahl von Batteriezellen auf, die in das Batteriemodul integriert werden. Typischerweise werden Batteriezellen in einem Batteriemodul in Reihe geschaltet, so dass sich die Ausgangsspannung des Batteriemoduls aus dem Produkt der Batteriezellenspannung und der Anzahl der in Reihe geschalteten Batteriezellen ergibt. Da Batteriemodule eine vorgegebene Ausgangsspannung aufzuweisen haben, wird damit auch die Anzahl der Batteriezellen im Batteriemodul vorgegeben. Entsprechend wird die Größe des Batteriemoduls so angepasst, dass es die vorgegebene Anzahl von Batteriezellen aufnehmen kann. Typische Batteriemodule weisen zwischen 8 und 36, insbesondere zwischen 12 und 36 Batteriezellen auf.

Eine Aufnahme für eine Batteriezelle im Batteriemodulinnenraum ist insbesondere so ausgebildet, dass die Aufnahme eine Batteriezelle aufnehmen kann. Bevorzugt ist das Batteriemodul für einen bestimmten Batteriezellentyp ausgelegt und die Aufnahmen entsprechend an die Abmessungen dieses Batteriezellentyps angepasst. Beispielsweise kann das Batteriemodul für Batteriezellen vom Typ 18650 ausgelegt sein. Hierbei handelt es sich um im Wesentlichen zylinderförmige Batteriezellen mit einem Durchmesser von ca. 18,6 mm und einer Höhe von ca. 65,2 mm. An diese Batteriezellen angepasste Aufnahmen können beispielsweise einen runden Aufnahmebereich aufweisen, dessen Durchmesser um ein Übermaß größer ist als der Batteriezellendurchmesser von 18,6 mm.

Neben Batteriezellen vom Typ 18650 kann das Batteriemodul auch für andere Typen von Batteriezellen ausgelegt sein, beispielsweise für Batteriezellen entsprechend einer der Typen 10180, 10280, 10440, 14250, 14500, 14560, 15270, 16340, 17340, 17500, 17670, 18350, 18500, 19670, 25500, 26650 oder 32600. Die Aufnahmen können hierzu beispielsweise einen Durchmesser aufweisen, der um ein Übermaß größer ist als der Batteriezellendurchmesser des entsprechenden Typs.

Vorzugsweise ist die Aufnahme so ausgestaltet, dass eine Batteriezelle form- und/oder kraftschlüssig in der Aufnahme fixierbar ist, um ein verrutschen oder verschieben der Batteriezelle im Normalbetrieb zu vermeiden. Weiterhin kann die Aufnahme Anschlussmittel aufweisen, um die Batteriezelle elektrisch zu beschalten, insbesondere mit weiteren Batteriezellen in Reihe zu schalten.

Die Aufnahmen können beispielsweise in mehreren Reihen angeordnet werden. Dies erlaubt eine kompakte Bauform des Batteriemoduls. Eine besonders dichte Packung der Batteriezellen kann dadurch erzielt werden, dass die Aufnahmen benachbarter Reihen zueinander versetzt angeordnet sind, vorzugsweise in hexagonaler Anordnung.

Das erfindungsgemäße Batteriemodul weist im Batteriemodulinnenraum zusätzlich zu den Aufnahmen einen Ausweichbereich auf, der so dimensioniert und angeordnet ist, dass mindestens eine in einer Aufnahme aufgenommene Batteriezelle zumindest teilweise in den Ausweichbereich verschiebbar ist.

Der Ausweichbereich ist so dimensioniert, dass mindestens eine in einer Aufnahme aufgenommene Batteriezelle zumindest teilweise in den Ausweichbereich verschiebbar ist. Die Dimensionierung, d.h. die Größe und die Form des Ausweichsbereichs sind daher insbesondere so zu wählen, dass ein Ausweichen mindestens einer Batteriezelle in den Ausweichbereich ermöglicht wird. Bevorzugt ist der Ausweichbereich so groß, dass er eine Batteriezelle mindestens zur Hälfte, weiter bevorzugt im Wesentlichen vollständig aufnehmen kann. Der Ausweichbereich ist bevorzugt insbesondere mindestens halb so groß, bevorzugt mindestens eben so groß, wie der von einer Aufnahme für eine Batteriezelle vorgesehene Platz, d.h. wie die Größe einer Aufnahme.

Sind die Aufnahmen für die Batteriezellen in N Reihen angeordnet, so entspricht die Größe des Ausweichbereichs vorzugsweise mindestens dem N/2-fachen, weiter bevorzugt mindestens dem N-fachen der Größe einer Aufnahme. Um eine kompakte Bauweise zu ermöglichen entspricht die Größe des Ausweichbereichs vorzugsweise höchstens dem 2N-fachen der Größe einer Aufnahme.

Weiterhin ist der Ausweichbereich so angeordnet, dass mindestens eine in einer Aufnahme aufgenommene Batteriezelle zumindest teilweise in den Ausweichbereich verschiebbar ist. Zu diesem Zweck kann der Ausweichbereich insbesondere an mindestens eine Aufnahme für eine Batteriezelle angrenzen. Der Ausweichbereich kann in einem Randbereich, insbesondere in einem Eckenbereich, des Batteriemodulinnenraums angeordnet sein. Alternativ kann der Ausweichbereich auch weiter innen im Batteriemodulinnenraum vorgesehen sein, beispielsweise umgeben von den Aufnahmen für die Batteriezellen.

Der Ausweichbereich kann auch mehrere Teilbereiche aufweisen, die an verschiedenen Stellen im Batteriemodulinnenraum angeordnet sein können, wobei durch die Gesamtheit der Teilbereiche zusammengenommen ausreichend Raum zur Verfügung gestellt wird, so dass mindestens eine Batteriezelle zumindest teilweise in den Ausweichbereich verschiebbar ist. Sind die Aufnahmen in Reihen angeordnet, so weist das Batteriemodul vorzugsweise einen Teilbereich des Ausweichbereichs pro Reihe auf. Die einzelnen Teilbereiche können beispielsweise am Rand einer Reihe oder auch an einer Innenposition in der Reihe angeordnet werden. Durch eine Anordnung der Teilbereiche am Rand der Reihen kann der Ausweichbereich auch dazu dienen, etwaige Bewegungen eines benachbarten Batteriemoduls auszugleichen, beispielweise wenn ein auf der entsprechenden Randseite angeordnetes benachbartes Batteriemodul durch

Krafteinwirkung verformt wird.

Die einzelnen Teilbereiche des Ausweichbereichs weisen bevorzugt jeweils eine Größe auf, die mindestens dem 0,5-fachen, vorzugsweise mindestens dem 1-fachen der Größe einer Aufnahme entspricht.

Bei einer Ausführungsform des Batteriemoduls ist das Batteriemodulgehäuse zumindest teilweise elastisch ausgebildet.

Diese Ausführungsform des Batteriemoduls stellt eine Abkehr von dem bisherigen Bestreben aus dem Stand der Technik dar, ein die Batteriezellen umgebendes Batteriemodulgehäuse immer starrer und massiver auszubilden, um die Batteriezellen vor einer Außeneinwirkung zu schützen. Es wurde vielmehr erkannt, dass sich die Batteriezellen ebenso gut oder sogar besser durch ein zumindest teilweise elastisch ausgebildetes Batteriemodulgehäuse schützen lassen.

Bei einem starren Batteriemodulgehäuse kommt es bei starker lokaler äußerer Krafteinwirkung, wie sie beispielsweise bei einem Crash auftritt, in der Regel zu einer lokalen plastischen Verformung des Batteriemodulgehäuses. Da die Batteriezellen im Inneren des Batteriemodulgehäuses durch das starre Batteriemodulgehäuse und die übrigen Batteriezellen räumlich fixiert sind, können die im Bereich der Verformung im Inneren des Batteriemodulgehäuses angeordneten Batteriezellen großen Kräften ausgesetzt und dadurch stark beschädigt werden.

Indem das Batteriemodulgehäuse zumindest teilweise elastisch ausgebildet wird, kann sich das Batteriemodulgehäuse bei einer starken lokalen äußeren Krafteinwirkung zumindest teilweise elastisch verformen. Dadurch ist das Batteriemodulgehäuse gegenüber im Stand der Technik üblichen starren und spröden Batteriemodulgehäusen dahingehend belastbarer, dass es bei Krafteinwirkung seltener zerbricht und so eine die Batteriezellen haltende und/oder schützende Funktion bewahrt.

Weiterhin führt die Kombination eines Ausweichbereichs im Batteriemodulinnenraum mit einem zumindest teilweise elastisch ausgebildeten Batteriemodulgehäuse zu dem synergetischen Effekt, dass das Ausweichen der Batteriezellen in den Ausweichbereich durch das elastische Batteriemodulgehäuse erleichtert wird. Insbesondere kann eine räumliche Fixierung der im Batteriemodulgehäuse angeordneten Batteriezellen durch die elastische Verformung des Batteriemodulgehäuses zumindest teilweise aufgehoben werden, so dass Batteriezellen der äußeren Krafteinwirkung leichter ausweichen können, und zwar insbesondere unter Ausnutzung des Ausweichbereichs. Beispielsweise kann ein elastischer Teilbereich des Batteriemodulgehäuses bei Krafteinwirkung so gedehnt werden, dass der Batteriemodulinnenraum in diesem Bereich vergrößert wird und dadurch das Verschieben einer Batteriezelle erleichtert.

Vergleichbare Vorteile wie bei der Ausführungsform, bei der das Batteriemodulgehäuse zumindest teilweise elastisch ausgebildet ist, können bei einer weiteren Ausführungsform dadurch erreicht werden, dass das Batteriemodulgehäuse zumindest teilweise eine normierte Steifigkeit von weniger als 140.000 $Nmm^2$, vorzugsweise von weniger als 50.000 $Nmm^2$, insbesondere von weniger als 25.000 $Nmm^2$ aufweist. Unter der normierten Steifigkeit S wird das Produkt $S = E \cdot I$ aus dem E-Modul E des verwendeten Werkstoffs und dem normierten Flächenträgheitsmoment I verstanden, wobei I definiert ist durch:

$$I = (t^3 \cdot 1\ \text{mm}) / 12,$$

wobei t die Wanddicke des Batteriemodulgehäuses und "1 mm" eine normierte Breite ist. Batteriemodulgehäuse aus dem Stand der Technik, die aus dicken Stahlblechen gefertigt werden, weisen zum Vergleich erheblich höhere normierte Steifigkeiten im Bereich von 700.000 $Nmm^2$ oder sogar von bis zu 2.000.000 $Nmm^2$ auf.

Eine normierte Steifigkeit von weniger als 140.000 $Nmm^2$, vorzugsweise weniger als 50.000 $Nmm^2$, insbesondere weniger als 25.000 $Nmm^2$, kann insbesondere durch Verwendung eines Werkstoffs mit einem Elastizitätsmodul von maximal 80.000 $N/mm^2$ erreicht werden. Andererseits können auch Werkstoffe mit größerem Elastizitätsmodul, beispielsweise Metalle wie Aluminium- oder Stahllegierungen, verwendet werden, wenn eine entsprechend dünne Wanddicke vorgesehen wird. Beispielsweise kann das Batteriemodulgehäuse teilweise oder im Wesentlichen vollständig aus dünnen Metallbleche, insbesondere Aluminium- oder Stahlblechen, mit einer Wanddicke im Bereich von 0.5 mm bis 1,5 mm gebildet werden.

Zum Erreichen des zuvor beschriebenen Zwecks können vorzugsweise zumindest eine Seitenwand des Batteriemodulgehäuses, vorzugsweise mehrere oder sämtliche Seitenwände und insbesondere im Wesentlichen das gesamte Batteriemodulgehäuse inklusive Deckel und Boden elastisch und/oder mit einer zuvor beschrieben Biegesteifigkeit ausgebildet sein.

Notwendige nicht-elastische bzw. biegesteife Teilbereiche des Batteriemodulgehäuses, beispielsweise zur elektrischen Verschaltung der Batteriezellen oder zur Fixierung des Batteriemodulgehäuses in einem Fahrzeug bzw. in einem Batteriepack, sind für die zuvor beschriebene Wirkung in der Regel unschädlich und werden von einem teilweise oder im Wesentlichen elastisch ausgebildeten Batteriemodulgehäuse bzw. einem Batteriemodulgehäuse, das teilweise oder im Wesentlichen eine zuvor beschriebene Biegesteifigkeit aufweist, mitumfasst.

Unter einem elastischen Teilbereich des Batteriemodulgehäuses wird insbesondere verstanden, dass der betreffende Teilbereich einen Elastizitätsmodul von maximal 80.000 N/mm$^2$, insbesondere von maximal 30.000 N/mm$^2$, aufweist. Crashsimulationen haben gezeigt, dass ein solcher Elastizitätsmodul geeignet ist, ein Ausweichen von Batteriezellen im Crashfall zu ermöglichen. Andererseits weist der Teilbereich vorzugsweise einen Elastizitätsmodul von mindestens 750 N/mm$^2$, bevorzugt von mindestens 1000 N/mm$^2$, insbesondere von mindestens 2000 N/mm$^2$ auf, um im Normalbetrieb, d.h. ohne Einwirkung großer äußerer Kräfte wie bei einem Crash, eine sichere und feste Einhausung der Batteriezellen zu gewährleisten und ein Verschieben der Batteriezellen im Batteriezelleninnenraum möglichst zu reduzieren oder zu vermeiden.

Die zuvor beschriebenen Elastizitätsmodule können insbesondere durch Wahl eines entsprechenden Werkstoffs erreicht werden. Insbesondere können mit Polycarbonaten Elastizitätsmodule im Bereich 2000 bis 3000, insbesondere 2200 bis 2800 N/mm$^2$ erreicht werden. Mit faserverstärkten Polycarbonaten können insbesondere Elastizitätsmodule im Bereich von 10.000 bis 30.000, insbesondere von 25.000 bis 30.000 N/mm$^2$, erreicht werden. Mit Polypropylenen können insbesondere Elastizitätsmodule im Bereich 800 bis 900 N/mm$^2$ erreicht werden und bei thermoplastischen Spritzgussteilen können insbesondere Elastizitätsmodule im Bereich von 1500 bis 8000 N/mm$^2$ erreicht werden.

Unter faserverstärkten Werkstoffen fallen insbesondere langfaserverstärkte und endlosfaserverstärkte Werkstoffe basierend auf Duroplasten und basierend auf Thermoplasten, im Folgenden als Faserverbundwerkstoffe oder Composite Sheet bezeichnet.

Der Faserverbundwerkstoff weist mindestens eine Faserlage aus einem Fasermaterial auf. Unter einer solchen Faserlage wird eine flächige Lage verstanden, welche durch im Wesentlichen in einer Fläche angeordnete Fasern gebildet wird. Die Fasern können durch ihre Lage zueinander miteinander verbunden sein, beispielsweise durch eine gewebeartige Anordnung der Fasern. Weiterhin kann die Faserlage auch einen Anteil Harz oder einen anderen Kleber aufweisen, um die Fasern miteinander zu verbinden. Die Fasern können alternativ auch unverbunden sein. Hierunter wird verstanden, dass die Fasern ohne Aufwendung einer nennenswerten Kraft voneinander gelöst werden können. Die Faserlage kann auch eine Kombination von verbundenen und unverbundenen Fasern aufweisen.

Die mindestens eine Faserlage ist in eine auf einem thermoplastischen Kunststoff basierende Matrix eingebettet. Hierunter wird verstanden, dass die Faserlage zumindest einseitig, vorzugsweise beidseitig von einem thermoplastischen Kunststoff umgeben ist. Der Rand der Matrix aus dem thermoplastischen Kunststoff bildet insbesondere die äußere Oberfläche des aus dem Faserverbundwerkstoff bestehenden Bauteils oder Halbzeugs.

Die Zahl der Faserlagen ist bei dem Faserverbundwerkstoff grundsätzlich nicht beschränkt. Es können daher auch zwei oder mehr Faserlagen übereinander angeordnet werden. Zwei übereinanderliegende Faserlagen können dabei jeweils einzeln in die Matrix eingebettet sein, so dass sie jeweils beidseitig von der Matrix umgeben sind. Weiterhin können zwei oder mehr Faserlagen auch unmittelbar übereinander liegen, so dass die ihre Gesamtheit von der Matrix umgeben wird. In diesem Fall können diese zwei oder mehr Faserlagen auch als eine dicke Faserlage angesehen werden.

Die Matrix des Faserverbundswerkstoffes ist vorzugsweise ein thermoplastischer Kunststoff. Geeignete thermoplastischen Kunststoffe sind Polycarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA), Polyamide (bevorzugt Polyamid 6 (PA6) und Polyamid 6,6 (PA6,6)) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona), oder Mischungen aus den genannten Polymeren, sowie Polycarbonat Blends mit olefinischen Copolymeren oder Pfropfpolymeren, wie beispielsweise Styrol/Acrylnitril Copolymeren und gegebenenfalls weiteren der oben genannten Polymeren. Als Matrix für die Faserverbundschicht eignen sich in einer weiteren Ausführungsform die unten genannten Polycarbonat-Zusammensetzungen. Erfindungsgemäß umfasst das Batteriemodulgehäuse ein Polycarbonatmaterial.

Bei einer Ausführungsform des Faserverbundwerkstoffs liegt der Volumengehalt des Fasermaterials am Gesamtvolumen des Faserverbundwerkstoffs im Allgemeinen im Bereich von 30 bis 60 Vol.-%, bevorzugt im Bereich 40 bis 55 Vol.-%.

Für den Teilbereich des Batteriemodulgehäuses wird weiterhin vorzugweise ein Material mit einer Bruchdehnung nach DIN ISO 527-1,-2 von mindestens 2 %, vorzugsweise von mindestens 15 %, insbesondere von mindestens 30 %, verwendet.

Bei einer Ausführungsform des Batteriemoduls ist im Ausweichbereich ein elastisches Element angeordnet. Durch dieses elastische Element kann verhindert werden, dass in den Aufnahmen angeordnete Batteriezellen im Normalbetrieb in den Ausweichbereich verschoben werden. Insbesondere kann das elastische Element zu diesem Zweck so ausgebildet und angeordnet sein, dass durch das elastische Element auf mindestens eine in einer Aufnahme angeordnete Batteriezelle eine Haltekraft ausgeübt wird. Wird als elastisches Element beispielsweise ein Federelement wie ein Kunststoff- oder Metallfederelement verwendet, so kann dieses Federelement eine oder mehrere Batteriezellen im Normalbetrieb in Position halten. Das elastische Element kann aber auch als elastischer Schaum ausgebildet werden, beispielsweise als elastischer Kunststoffschaum.

Vorzugsweise erstreckt sich das elastische Element so über den Ausweichbereich, dass der Zugang zum

Ausweichbereich im Normalbetrieb versperrt ist. Beispielsweise kann das elastische Element den Ausweichbereich hierzu zumindest zur Hälfte, vorzugsweise im Wesentlichen vollständig ausfüllen, insbesondere wenn es sich bei dem elastischen Element um einen elastischen Schaum handelt. Dadurch kann auf einfache Weise verhindert werden, dass in den Aufnahmen angeordnete Batteriezellen im Normalbetrieb in den Ausweichbereich verschoben werden.

Um ein Verschieben von Batteriezellen in den Ausweichbereich im Normalbetrieb sicher zu verhindern ist das elastische Element vorzugsweise so ausgebildet, dass es bei einer Komprimierung von höchstens 10 % seiner ursprünglichen Ausdehnung eine der Komprimierung entgegen gerichtete Rückstellkraft von mindestens 50 N bewirkt. Bei einer Feder kann dies durch eine entsprechende Wahl der Federkonstanten erreicht werden. Wird beispielsweise eine 20 mm lange Feder mit einer Federkonstanten von 25.000 N/m verwendet, so führt eine Komprimierung der Feder um 10 %, d.h. um 2 mm auf 18 mm, zu einer Rückstellkraft von 25.000 N/m · 2 mm = 50 N.

Durch die zuvor beschriebene Wahl des elastischen Elements wird erreicht, dass Kräfte, die während des normalen Betriebs auftreten, wie zum Beispiel bei einer Vollbremsung, höchstens zu einer geringen Komprimierung des elastischen Elements führen, so dass die Batteriezellen weiterhin in den Aufnahmen gehalten werden.

Aufgrund seiner Elastizität kann das elastische Element im Falle einer hohen Krafteinwirkung auf das Batteriemodul wie bei einem Crash komprimiert werden, so dass der Ausweichbereich für eine mögliche Verschiebung einer oder mehrerer Batteriezellen freigegeben wird. Um ein Freigeben des Ausweichbereichs durch Kompression des elastischen Elements zu gewährleisten, ist das elastische Element vorzugsweise so ausgebildet, dass es bei einer Komprimierung von mindestens 50 % seiner ursprünglichen Ausdehnung eine der Komprimierung entgegen gerichtete Rückstellkraft von höchstens 100 N bewirkt.

Bei einer weiteren Ausführungsform des Batteriemoduls ist das elastische Element mit dem Batteriemodulgehäuse form-, kraft- und/oder stoffschlüssig verbunden. Dadurch kann ein Verrutschen des elastischen Elements vor dem Einsetzen der Batteriezellen in den Batteriemodulinnenraum verhindert und das Einsetzen so erleichtert werden. Weiterhin wird das elastische Element auf diese Weise an einer vorgegebenen und gegebenenfalls vorteilhaften Position im Batteriemodul gehalten.

Das elastische Element kann beispielsweise in das Batteriemodul eingeklebt oder über Rastmittel mit diesem verrastet sein. Weiterhin kann das elastische Element auch so dimensioniert werden, dass es durch die Decke und den Boden des Batteriemodulgehäuses form- und/oder kraftschlüssig gehalten wird. Die form-, kraft- und/oder stoffschlüssige Verbindung kann weiter bevorzugt so schwach ausgebildet sein, dass sie im Fall großer Krafteinwirkung wie bei einem Crash gelöst wird und das elastische Element innerhalb des Batteriemodulinnenraums bewegt werden kann.

In einer weiteren Ausführungsform des Batteriemoduls ist das elastische Element zumindest mit einem Teil des Batteriemodulgehäuses einstückig ausgebildet. Beispielsweise kann das elastische Element bei der Herstellung des Batteriemodulgehäuses vorgesehen werden, beispielsweise indem es zusammen mit dem Batteriemodulgehäuse im Spritzguss hergestellt und so mit diesem verspritzt wird. Hierdurch kann das elastische Element kostengünstig hergestellt und ohne zusätzlichen Montageschritt im Batteriemodulinnenraum vorgesehen werden.

Alternativ kann auch ein separates elastisches Element vorgesehen werden. Dies hat den Vorteil, dass für das elastische Element ein anderer Werkstoff verwendet werden kann als für das Batteriemodulgehäuse, sodass die Eigenschaften des elastischen Elements unabhängig von den Eigenschaften des Batteriemodulgehäuses eingestellt werden können.

In einer weiteren Ausführungsform des Batteriemoduls wird mindestens eine Aufnahme für eine Batteriezelle zumindest teilweise durch eine Vertiefung im Batteriemodulgehäuse gebildet. Durch eine Vertiefung im Batteriemodulgehäuse, insbesondere im Boden und/oder im Deckel des Batteriemodulgehäuses, kann eine Batteriezelle für den Normalbetrieb sicher im Batteriemodulinnenraum fixiert werden. Die Dimensionen der Vertiefung sind insbesondere an die aufzunehmende Batteriezelle angepasst, so dass die Batteriezelle in die Vertiefung aufnehmbar ist. Bevorzugt weist das Batteriemodulgehäuse im Wesentlichen für alle Aufnahmen jeweils mindestens eine solche Vertiefung auf.

Die Vertiefungen sind vorzugsweise so flach ausgebildet, dass die Batteriezellen im Falle großer Krafteinwirkung wie bei einem Crash aus den Vertiefungen herausgelangen können und so innerhalb des Batteriemodulinnenraums verschiebbar sind. Vorzugsweise beträgt die Tiefe der Vertiefungen 1 bis 3 mm. Die Vertiefungen können am Rand Abschrägungen aufweisen, um im Falle einer großen Krafteinwirkung ein Verschieben der Batteriezellen aus den Vertiefungen zu erleichtern.

Bei einer weiteren bevorzugten Ausführungsform des Batteriemoduls wird mindestens eine Aufnahme für eine Batteriezelle zumindest teilweise durch ein am Batteriemodulgehäuse befestigtes Kragenelement gebildet. Das Kragenelement ist vorzugsweise für eine kraft und/oder formschlüssige Fixierung einer in der Aufnahme aufgenommenen Batteriezelle ausgebildet. Vorzugsweise ist ein solches Kragenelement auf dem Boden und/oder am Deckel des Batteriemodulgehäuses vorgesehen. Weiterhin ist bevorzugt im Wesentlichen für alle Aufnahmen mindestens ein solches Kragenelement vorgesehen.

Zusätzlich oder alternativ kann bei einer weiteren Ausführungsform des Batteriemoduls mindestens an einer Aufnahme ein Halteelement angeordnet sein, um eine Batteriezelle bei Normalbetrieb in der Aufnahme zu halten.

Das Kragenelement bzw. das Halteelement sind vorzugsweise so ausgestaltet, dass sie bei einer hohen Krafteinwirkung wie bei einem Crash, umklappen, abbrechen oder auf eine andere Weise eine in der Aufnahme angeordnete Batteriezelle freigeben, sodass diese im Batterieinnenraum verschiebbar ist. Zu diesem Zweck kann das Kragenelement beispielsweise aus mehreren Segmenten bestehen, so dass einzelne Segmente des Kragenelements nach außen umklappen können. Vorzugsweise sind das Kragenelement bzw. das Halteelement so ausgestaltet, dass sie eine in der Aufnahme angeordnete Batteriezelle bei einer auf sie wirkenden Kraft von mehr als 100 N, vorzugsweise von mehr als 75 N, freigeben.

Bei einer weiteren Ausführungsform des Batteriemoduls umfasst das Batteriemodulgehäuse und/oder ein im Ausweichbereich angeordnetes elastisches Element einen flammgeschützten Werkstoff, insbesondere einen flammgeschützten Kunststoff.

Unter einem flammgeschützten Werkstoff, insbesondere einem flammgeschützten Kunststoff, wird vorliegend ein Werkstoff verstanden, der zwar schmelzen und ggf. auch brennen kann, solange eine Flamme auf ihn einwirkt, der jedoch nach dem Erlöschen den Flamme nicht weiter brennt und so eine Ausbreitung eines Feuers verhindert. Insbesondere wird unter einem flammgeschützten Werkstoff vorliegend ein Werkstoff verstanden, der die Voraussetzungen des Tests UL 94-V (Stab) erfüllt. Bei dem Test UL 94-V (Stab) handelt es sich um einen Test der Underwriters Laboratories aus der Vorschrift UL 94 ("Tests for Flammability of Plastic Materials for Parts in Devices and Applications"). Der Vorzugsweise erfüllt der flammgeschützte Werkstoff die Klassifizierung V-2, vorzugsweise die Klassifizierung V-1, insbesondere die Klassifizierung V-0 im Test UL 94-V (Stab).

Bevorzugt erfüllt der vom Sicherheitswandabschnitt umfasste, insbesondere flammgeschützte Werkstoff die Klassifizierung 5VB beim Test UL 94-5VB (Platte) unter Bildung eines Brandlochs.

Die zuvor genannten UL-Tests ergeben sich entsprechend auch aus DIN EN 60695-11-10 bzw. DIN EN 60695-11-20.

Bei der erfindungsgemäßen Ausführungsform des Batteriemoduls umfasst das Batteriemodulgehäuse ein Polycarbonatmaterial gemäß Anspruch 1. Das Batteriemodulgehäuse kann beispielsweise teilweise oder im Wesentlichen vollständig auf einem Polycarbonatmaterial basieren.

Polycarbonatmaterialien zeichnen sich durch eine gute Elastizität und eine hohe Zähigkeit aus, insbesondere auch bei niedrigen Temperaturen von bis zu -30 °C, die beim Einsatz in Elektrofahrzeugen durchaus auftreten können. Weiterhin können Polycarbonatmaterialien mit einem guten Flammenschutz versehen werden.

Als Polycarbonatmaterialien kommen vorliegend insbesondere Polycarbonatzusammensetzungen enthaltend

A) 70,0 bis 90,0 Gew.-Teile, bevorzugt 75,0 bis 88,0 Gew.-Teile, besonders bevorzugt 77,0 bis 85,0 Gew.-Teile (bezogen auf die Summe der Gew.-Teile der Komponenten A + B + C) lineares und/oder verzweigtes aromatisches Polycarbonat und/oder aromatisches Polyestercarbonat,

B) 6,0 bis 15,0 Gew.-Teile, bevorzugt 7,0 bis 13,0 Gew.-Teile, besonders bevorzugt 9,0 bis 11,0 Gew.-Teile (bezogen auf die Summe der Gew.-Teile der Komponenten A + B + C) mindestens eines Pfropfpolymerisat mit

   B.1) 5 bis 40 Gew.-%, vorzugsweise 5 bis 30 Gew.-%, besonders bevorzugt 10 bis 20 Gew.-% (jeweils bezogen auf das Pfropfpolymerisat B) einer Hülle aus mindestens einem Vinylmonomeren und

   B.2) 95 bis 60 Gew.-%, vorzugsweise 95 bis 70 Gew.-%, besonders bevorzugt 80 bis 90 Gew.-% (jeweils bezogen auf das Pfropfpolymerisat B) einer oder mehrerer Pfropfgrundlagen aus Silikon-Acrylat-Kompositkautschuk,

C) 2,0 bis 15,0 Gew.-Teile, bevorzugt 3,0 bis 13,0 Gew.-Teile, besonders bevorzugt 4,0 bis 11,0 Gew.-Teile (bezogen auf die Summe der Gew.-Teile der Komponenten A + B + C) Phosphorverbindungen ausgewählt aus den Gruppen der Mono- und oligomeren Phosphor- und Phosphonsäureester, Phosphonatamine, Phosphazene und Phosphinate, wobei auch Mischungen von mehreren Komponenten ausgewählt aus einer oder verschiedenen dieser Gruppen als Flammschutzmittel zum Einsatz kommen können.

D) 0 bis 3,0 Gew.-Teile, bevorzugt 0,01 bis 1,00 Gew.-Teile, besonders bevorzugt 0,1 bis 0,6 Gew.-Teile (bezogen auf die Summe der Gew.-Teile der Komponenten A + B+ C) Antitropfmittel,

E) 0 - 3,0 Gew.-Teile, bevorzugt 0 bis 1,0 Gew.-Teile (bezogen auf die Summe der Gew.-Teile der Komponenten A + B + C) thermoplastische Vinyl(Co)Polymerisat (E.1) und/oder Polyalkylenterephthalat (E.2), besonders bevorzugt ist die Zusammensetzung frei von thermoplastischen Vinyl(Co)Polymerisate (E.1) und/oder Polyalkylenterephthalaten (E.2), und

F) 0 bis 20,0 Gew.-Teile, bevorzugt 0,1 bis 10,0 Gew.-Teile, besonders bevorzugt 0,2 bis 5,0 Gew.-Teile (bezogen auf die Summe der Gew.-Teile der Komponenten A + B + C) weitere Zusatzstoffe,

wobei die Zusammensetzungen vorzugsweise frei sind von kautschukfreiem Polyalkyl(alkyl)acrylat, und wobei alle Gewichtsteilangaben in der vorliegenden Anmeldung so normiert sind, dass die Summe der Gewichtsteile der Komponenten A + B + C in der Zusammensetzung 100 ergeben, in Frage.

Als Polycarbonatmaterialien kommen vorliegend weiterhin insbesondere Polycarbonatzusammensetzungen enthaltend

A) 70,0 bis 90,0 Gew.-Teile, bevorzugt 75,0 bis 88,0 Gew.-Teile, besonders bevorzugt 77,0 bis 85,0 Gew.-Teile (bezogen auf die Summe der Gew.-Teile der Komponenten A + B* + C) lineares und/oder verzweigtes aromatisches Polycarbonat und/oder aromatisches Polyestercarbonat,
B*) 6,0 bis 15,0 Gew.-Teile, bevorzugt 7,0 bis 13,0 Gew.-Teile, besonders bevorzugt 9,0 bis 11,0 Gew.-Teile (bezogen auf die Summe der Gew.-Teile der Komponenten A + B* + C) mindestens eines Pfropfpolymerisat mit

B*.1) 5 bis 95, vorzugsweise 30 bis 80 Gew.-Teile, einer Mischung aus

B*.1.1) 50 bis 95 Gew.-Teilen Styrol, $\alpha$-Methylstyrol, methylkernsubstituiertem Styrol, $C_1$-$C_8$-Alkylmethacrylat, insbesondere Methylmethacrylat, $C_1$-$C_8$-Alkylacrylat, insbesondere Methylacrylat, oder Mischungen dieser Verbindungen und
B*.1.2) 5 bis 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl- bzw. -phenyl-N-substituierte Maleinimide oder Mischungen dieser Verbindungen auf

B*.2) 5 bis 95, vorzugsweise 20 bis 70 Gew.-Teilen einer kautschukhaltigen Pfropfgrundlage auf Butadien- oder Acrylatbasis,

C) 2,0 bis 15,0 Gew.-Teile, bevorzugt 3,0 bis 13,0 Gew.-Teile, besonders bevorzugt 4,0 bis 11,0 Gew.-Teile (bezogen auf die Summe der Gew.-Teile der Komponenten A + B* + C) Phosphorverbindungen ausgewählt aus den Gruppen der Mono- und oligomeren Phosphor- und Phosphonsäureester, Phosphonatamine, Phosphazene und Phosphinate, wobei auch Mischungen von mehreren Komponenten ausgewählt aus einer oder verschiedenen dieser Gruppen als Flammschutzmittel zum Einsatz kommen können,
D) 0 bis 3,0 Gew.-Teile, bevorzugt 0,01 bis 1,00 Gew.-Teile, besonders bevorzugt 0,1 bis 0,6 Gew.-Teile (bezogen auf die Summe der Gew.-Teile der Komponenten A + B* + C) Antitropfmittel,
E) 0 - 3,0 Gew.-Teile, bevorzugt 0 bis 1,0 Gew.-Teile (bezogen auf die Summe der Gew.-Teile der Komponenten A + B* + C) thermoplastische Vinyl(Co)Polymerisat (E.1) und/oder Polyalkylenterephthalat (E.2), besonders bevorzugt ist die Zusammensetzung frei von thermoplastischen Vinyl(Co)Polymerisate (E.1) und/oder Polyalkylenterephthalaten (E.2), und
F) 0 bis 20,0 Gew.-Teile, bevorzugt 0,1 bis 10,0 Gew.-Teile, besonders bevorzugt 0,2 bis 5,0 Gew.-Teile (bezogen auf die Summe der Gew.-Teile der Komponenten A + B* + C) weitere Zusatzstoffe,

wobei die Zusammensetzungen vorzugsweise frei sind von kautschukfreiem Polyalkyl(alkyl)acrylat, und wobei alle Gewichtsteilangaben in der vorliegenden Anmeldung so normiert sind, dass die Summe der Gewichtsteile der Komponenten A + B* + C in der Zusammensetzung 100 ergeben, in Frage.
Die einzelnen Komponenten der zuvor beschriebenen Polycarbonatzusammensetzungen werden im Folgenden näher erläutert:

## Komponente A

Geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).
Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.
Diphenole zur Herstellung der aromatischen Polycarbonate und/oder aromatischen Polyestercarbonate sind vorzugsweise solche der Formel (I)

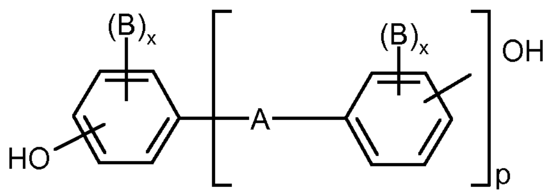

(I),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, - CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

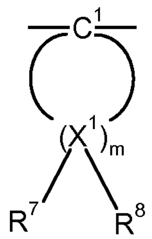

(II)

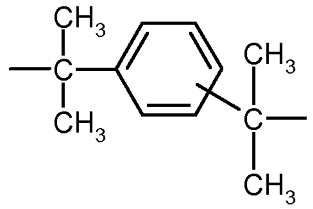

(III)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^7$ und $R^8$ für jedes $X^1$ individuell wählbar, unabhängig voneinander Wasserstoff oder $C_1$ bis $C_6$-Alkyl, vorzugsweise Wasserstoff, Methyl oder Ethyl,
$X^1$ Kohlenstoff und
m eine ganze Zahl von 4 bis 7, bevorzugt 4 oder 5 bedeuten, mit der Maßgabe, dass an mindestens einem Atom $X^1$, $R^7$ und $R^8$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung der Copolycarbonate gemäß Komponente A können auch 1,0 bis 25,0 Gew.-%, vorzugsweise 2,5 bis 25,0 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10,0 Mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten. Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,00 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,40, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

## Komponente B

Die Pfropfpolymerisate B werden durch radikalische Polymerisation, z.B. durch Emulsions-, Suspensions-, Lösungs- oder Massepolymerisation, vorzugsweise durch Emulsionspolymerisation hergestellt.

Geeignete Monomere B.1 sind Vinylmonomere wie Vinylaromaten und/oder kernsubstituierte Vinylaromaten (wie Styrol, $\alpha$-Methylstyrol, p-Methylstyrol, p-Chlorstyrol), Methacrylsäure-($C_1$-$C_8$)-Alkylester (wie Methylmethacrylat, Ethylmethacrylat, 2-Ethylhexylmethacrylat, Allylmethacrylat), Acrylsäure-($C_1$-$C_8$)-Alkylester (wie Methylacrylat, Ethylacrylat, n-Butylacrylat, t-Butylacrylat), organische Säuren (wie Acrylsäure, Methacrylsäure) und/oder Vinylcyanide (wie Acrylnitril und Methacrylnitril) und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, $\alpha$-Methylstyrol, Methylmethacrylat, n-Butylacrylat und Acrylnitril. Besonders bevorzugt wird als Monomer B.1 Methylmethacrylat eingesetzt.

Die Glasübergangstemperatur der Pfropfgrundlage B.2 beträgt < 10°C, vorzugsweise < 0°C, besonders bevorzugt < -20°C. Die Pfropfgrundlage B.2 hat im Allgemeinen eine mittlere Teilchengröße (dso-Wert) von 0,05 bis 10 $\mu$m, vorzugsweise 0,06 bis 5 $\mu$m, besonders bevorzugt 0,08 bis 1 $\mu$m.

Die Glasübergangstemperaturen wird mittels dynamischer Differenz-Thermoanalyse (DSC) gemäß der Norm DIN EN 61006 bei einer Heizrate von 10 K/min mit Definition der $T_g$ als Mittelpunkttemperatur (Tangentenmethode) bestimmt.

Die mittlere Teilchengröße dso ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Als Pfropfgrundlage B.2 wird Silikon-Acrylat-Kompositkautschuk eingesetzt. Diese Silikon-Acrylat-Kompositkautschuke sind vorzugsweise Komposit-Kautschuke mit pfropfaktiven Stellen enthaltend 10 - 90 Gew.-%, vorzugsweise 30 - 85 Gew.-% Silikonkautschuk-Anteil und 90 bis 10 Gew.-%, vorzugsweise 70 - 15 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen.

Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigheit der fertigen Harzzusammensetzung nachteilig beeinflußt.

Silikon-Acrylat-Komposit-Kautschuke sind bekannt und beispielsweise beschrieben in US 5,807,914, EP 430134 und US 4888388.

Geeignete Silikonkautschuk-Komponenten B.2.1 der Silikon-Acrylat-Kompositkautschuke gemäß B.2 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß B.2.1 wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenylcyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40,0 Gew.-%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quellungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

$$CH_2=C(R^9)\text{-}COO\text{-}(CH_2)_p\text{-}SiR^{10}{}_nO_{(3-n)/2} \quad (V\text{-}1)$$

$$CH_2=CH\text{-}SiR^{10}{}_nO_{(3-n)/2} \quad (V\text{-}2)$$

oder

$$HS\text{-}(CH_2)_p\text{-}SiR^{10}{}_nO_{(3-n)/2} \quad (V\text{-}3),$$

wobei

$R^9$ für Wasserstoff oder Methyl stehen,

$R^{10}$ für $C_1$-$C_4$-Alkyl, vorzugsweise Methyl, Ethyl oder Propyl, oder Phenyl,

n 0, 1 oder 2 und

p eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.

Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ- Methacryloyloxy-propyltrimethoxy-silan, γ-Methacryloyloxy-propylethoxydiethyl-silan, γ-Methacryloyloxypropyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben. Der Silikonkautschuk fällt dabei in Form eines wäßrigen Latex an. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wäßrigen alkalischen Lösung neutralisiert wird, z.B. durch Zugabe einer wäßrigen Natriumhydroxid, Kaliumhydroxid oder Natriumcarbonat-Lösung.

Geeignete Polyalkyl(meth)acrylatkautschuk-Komponenten B.2.2 der Silikon-Acrylat-Kompositkautschuke gemäß B.2 können hergestellt werden aus Methacrylsäurealkylestern und/oder Acrylsäurealkylestern, einem Vernetzungsmittel (IV) und einem Pfropfmittel (V). Hierbei sind beispielhafte und bevorzugte Methacrylsäurealkylester und/oder Acrylsäurealkylester die $C_1$ bis $C_8$-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-$C_1$-$C_8$-alkylester, wie Chlorethylacrylat sowie Mischungen dieser Monomeren. Besonders bevorzugt ist n-Butylacrylat.

Als Vernetzungsmittel (IV) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (V) sind Allylmethacrylat, Triallylcyanurat, Triallylisocyanurat oder Mischungen hieraus. Allylmethacrylat kann auch als Vernetzungsmittel (IV) eingesetzt werden. Die Pfropfmittel können alleine oder in Gemischen aus mindestens zwei Pfropfmitteln verwendet werden.

Die Menge an Vernetzungsmittel (IV) und Pfropfmittel (V) beträgt 0,1 bis 20 Gew.-%, bezogen auf das gesamte Gewicht der Polyalkyl(meth)acrylatkautschuk-Komponente des Silikonacrylat-Kautschuks.

Der Silikonacrylat-Kompositkautschuk wird hergestellt, indem zunächst der Silikonkautschuk gemäß B.2.1 als wäßriger Latex hergestellt wird. Dieser Latex wird anschließend mit den zu verwendenden Methacrylsäurealkylestern und/oder Acrylsäurealkylestern, dem Vernetzungsmittel (IV) und dem Pfropfmittel (V) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der als Komponente B) genannten Silikon-Acrylat-Komposit-Pfropfkautschuke B werden die Monomere B.1 auf die Kautschuk-Grundlage B.2 aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) ab. Nach der Polymerisation zum Silikon(acrylat)-Pfropfkautschuk wird der wäßrige Latex in heißes Wasser gegeben, in dem zuvor Metallsalze gelöst wurden, wie z.B. Calciumchlorid oder Magnesiumsulfat. Dabei koaguliert der Silikon(acrylat)-Pfropfkautschuk und kann anschließend separiert werden.

Die als Komponente B) genannten Methacrylsäurealkylester- und Acrylsäurealkylester-Pfropfkautschuke sind kommerziell erhältlich. Beispielhaft seien genannt: Metablen® SX 005, Metablen® S-2030 und Metablen® SRK 200 der Mitsubishi Rayon Co. Ltd.

## Komponente B*

Die Pfropfpolymerisate B* werden durch radikalische Polymerisation, z.B. durch Emulsions-, Suspensions-, Lösungs- oder Massepolymerisation, vorzugsweise durch Emulsionspolymerisation hergestellt.

Die Pfropfpolymerisate B* umfassen z.B. Pfropfpolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Polymerisate B* sind partiell vernetzt und besitzen Gelgehalte (gemessen in Toluol) von über 20 Gew.-%, vorzugsweise über 40 Gew.-%, insbesondere über 60 Gew.-%.

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Bevorzugte Pfropfpolymerisate B* umfassen Pfropfpolymerisate aus:

B*.1) 5 bis 95, vorzugsweise 30 bis 80 Gew.-Teile, einer Mischung aus

B*.1.1) 50 bis 95 Gew.-Teilen Styrol, α-Methylstyrol, methylkernsubstituiertem Styrol, $C_1$-$C_8$-Alkylmethacrylat, insbesondere Methylmethacrylat, $C_1$-$C_8$-Alkylacrylat, insbesondere Methylacrylat, oder Mischungen dieser Verbindungen und

B*.1.2) 5 bis 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl- bzw. -phenyl-N-substituierte Maleinimide oder Mischungen dieser Verbindungen auf

B*.2) 5 bis 95, vorzugsweise 20 bis 70 Gew.-Teilen einer kautschukhaltigen Pfropfgrundlage.

Vorzugsweise hat die Pfropfgrundlage eine Glasübergangstemperatur unter -10°C.

Besonders bevorzugt ist eine Pfropfgrundlage auf Basis eines Polybutadienkautschuks.

Die Glasübergangstemperaturen wird mittels dynamischer Differenz-Thermoanalyse (DSC) gemäß der Norm DIN EN 61006 bei einer Heizrate von 10 K/min mit Definition der $T_g$ als Mittelpunkttemperatur (Tangentenmethode) bestimmt.

Bevorzugte Pfropfpolymerisate B* sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzuge Pfropfpolymerisate B* sind Pfropfpolymerisate, die durch Pfropfreaktion von

I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf

II. 30 bis 90, vorzugsweise 40 bis 85, insbesondere 50 bis 80 Gew.-%, bezogen auf Pfropfprodukt, eines Butadien-Polymerisats mit mindestens 50 Gew.-%, bezogen auf II, Butadienresten als Pfropfgrundlage,

erhältlich sind.

Der Gelanteil dieser Pfropfgrundlage II beträgt vorzugsweise mindestens 70 Gew.-% (in Toluol gemessen), der Pfropfgrad G 0,15 bis 0,55 und der mittlere Teilchendurchmesser $d_{50}$ des Pfropfpolymerisats B* 0,05 bis 2, vorzugsweise 0,1 bis 0,6 $\mu$m.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden unter Pfropfpolymerisaten B* auch solche Produkte verstanden, die durch Polymerisation der Pfropfmonomeren in Gegenwart der Pfropfgrundlage gewonnen werden.

Die Formmassen haben vorzugsweise einen Gesamtanteil aus den aus Pfropfmonomeren gebildeten oder frei zugesetztem, nicht chemisch an die Pfropfgrundlage gebundenen Polymerisats, z.B. freies SAN, von weniger als 2,0 Gew.-% , vorzugsweise weniger als 1,5 Gew.-% (d.h. von 0,0 - 2,0 Gew.%, vorzugsweise 0,0 - 1,5 Gew.-%), bezogen auf die Gesamtformmasse. Bei einer Erhöhung dieses Anteils verschlechtern sich die Eigenschaften drastisch.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Weitere bevorzugte Pfropfpolymerisate B* sind z.B. auch Pfropfpolymerisate aus

(a) 20 bis 90 Gew.-%, bezogen auf B*, Acrylatkautschuk als Pfropfgrundlage und

(b) 10 bis 80 Gew.-%, bezogen auf B*, mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Pfropfgrundlage aus Acrylatkautschukt hat eine Glasübergangstemperatur von kleiner als -20°C, vorzugsweise kleiner -30°C.

Die Acrylatkautschuke (a) der Polymerisate B* sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 500, insbesondere 0,05 bis 2,00 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

## Komponente C

Die Zusammensetzungen enthalten weiterhin Flammschutzmittel, wobei diese vorzugsweise ausgewählt sind aus der Gruppe, die die phosphorhaltigen Flammschutzmittel und halogenierten Flammschutzmittel umfaßt.

Besonders bevorzugt werden phosphorhaltige Flammschutzmittel, wobei diese phosphorhaltigen Flammschutzmittel ausgewählt sind aus den Gruppen der Mono- und oligomeren Phosphor- und Phosphonsäureester, Phosphonatamine, Phosphazene und Phosphinsäuresalzen, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (VI)

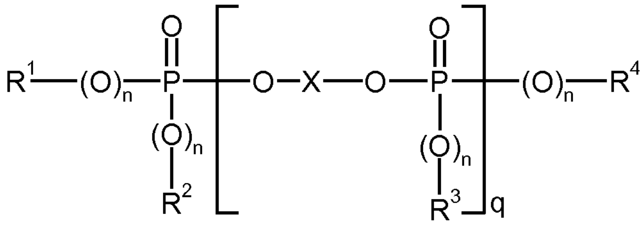

(VI)

worin

R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu acht Etherbindungen enthalten kann, bedeuten.

Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
X in der Formel (VI) bedeutet bevorzugt einen ein- oder mehrkernigen aromatischen Rest mit 6 bis 30 C-Atomen. Dieser leitet sich bevorzugt von Diphenolen der Formel (I) ab.
n in der Formel (VI) kann, unabhängig voneinander, 0 oder 1 sein, vorzugsweise ist n gleich 1.
q (auch in Formel VII) steht für ganzzahlige Werte von 0 bis 30, bevorzugt 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00, und besonders bevorzugt von 1,08 bis 1,60.
X steht besonders bevorzugt für

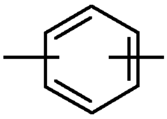 , 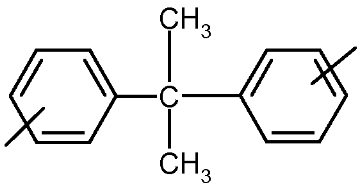 , 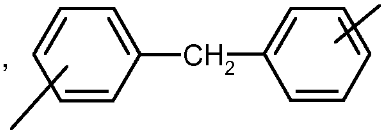 ,

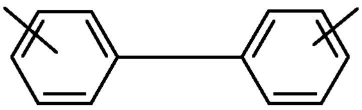 , 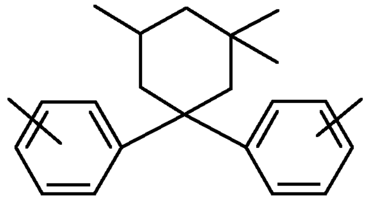

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab. Phosphorverbindungen der Formel (VI) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (VI), die sich vom Bisphenol A ableiten, ist insbesondere bevorzugt.

Höchst bevorzugt als Komponente C ist Bisphenol-A basierendes Oligophosphat gemäß Formel (VIa)

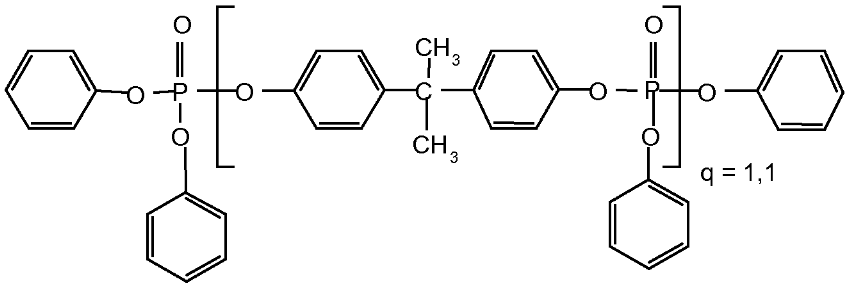

(VIa).

In einer alternativen bevorzugten Ausführungsform ist Komponente C Resorcinol-basierendes Oligophosphat gemäß Formel (VIb)

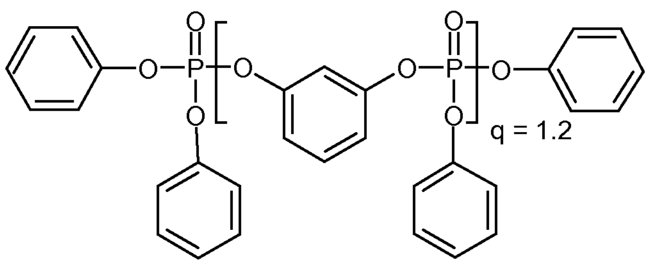

(VIb).

Die Phosphorverbindungen gemäß Komponente C sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als Komponente C können auch Mischungen von Phosphaten mit unterschiedlicher chemischer Struktur und/oder mit gleicher chemischer Struktur und verschiedenem Molekulargewicht eingesetzt werden.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Weitere bevorzugte Flammschutzmittel sind Salze einer Phosphinsäure mit beliebigen Metallkationen. Es können auch Mischungen von Salzen eingesetzt werden, die sich in Ihrem Metallkation unterscheiden. Bei den Metallkationen handelt es sich um die Kationen Metalle der 1. Hauptgruppe (Alkalimetalle, vorzugsweise $Li^+$, $Na^+$, $K^+$), der 2. Hauptgruppe (Erdalkalimetalle; vorzugsweise $Mg^{2+}$, $Ca^{2+}$, $Sr^{2+}$, $Ba^{2+}$, besonders bevorzugt $Ca^{2+}$) oder der 3. Hauptgruppe (Elemente der Borgruppe; vorzugsweise $Al^{3+}$) und/oder der 2., 7. oder 8. Nebengruppe (vorzugsweise $Zn^{2+}$, $Mn^{2+}$, $Fe^{2+}$, $Fe^{3+}$) des Periodensystems ist.

Vorzugsweise wird ein Salz oder eine Mischung von Salzen einer Phosphinsäure der Formel (IX) eingesetzt,

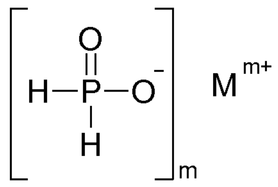

(IX)

worin $M^{m+}$ ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IX)
für m = 1 die Metallkationen $M^+ = Li^+$, $Na^+$, $K^+$,
für m = 2 die Metallkationen $M^{2+} = Mg^{2+}$, $Ca^{2+}$,$Sr^{2+}$, $Ba^{2+}$ und
für m = 3 die Metallkationen $M^{3+} = Al^{3+}$,
höchst bevorzugt sind $Ca^{2+}$ (m = 2) und $Al^{3+}$ (m = 3).

In einer bevorzugten Ausführungsform ist die mittlere Teilchengröße $d_{50}$ des Phosphinsäuresalzes (Komponente C) kleiner als 80 μm, vorzugsweise kleiner als 60 μm, besonders bevorzugt ist $d_{50}$ zwischen 10 μm und 55 μm. Die mittlere Teilchengröße $d_{50}$ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße $d_{50}$ unterscheiden.

Diese Anforderungen an die Teilchengröße sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden.

## Komponente D

Als Antitropfmittel können die Zusammensetzungen vorzugsweise fluorierte Polyolefine D enthalten. Fluorierte Polyolefine sind allgemein bekannt (vgl. z.B. EP-A 640 655). Ein handelsübliches Produkt ist beispielsweise Teflon® 30 N von der Firma DuPont.

Die fluorierten Polyolefine können auch in Form einer koagulierten Mischung von Emulsionen der fluorierten Polyolefine mit Emulsionen der Pfropfpolymerisate B) bzw. B*) oder einer Emulsion eines Copolymerisats E.1) vorzugsweise auf Styrol/Acrylnitril-Basis oder Polymethylmethacrylat-Basis eingesetzt werden, wobei das fluorierte Polyolefin als Emulsion mit einer Emulsion des Pfropfpolymerisats bzw. (Co)polymerisats gemischt und anschließend koaguliert wird.

Weiterhin können die fluorierten Polyolefine als Präcompound mit dem Pfropfpolymerisat B) oder einem Copolymerisat E.1) auf vorzugsweise Styrol/Acrylnitril-Basis oder Polymethylmethacrylat-Basis eingesetzt werden. Die fluorierten Polyolefine werden als Pulver mit einem Pulver oder Granulat des Pfropfpolymerisats bzw. Copolymerisats vermischt und in der Schmelze im Allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, welcher durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Polymethylmethacrylat und Mischungen daraus. Das Polymerisat wird nach saurer Fällung und nachfolgender Trocknung als rieselfähiges Pulver eingesetzt.

Die Koagulate, Präcompounds bzw. Masterbatches besitzen üblicherweise Feststoffgehalte an fluoriertem Polyolefin von 5 bis 95 Gew.-%, vorzugsweise 7 bis 60 Gew.-%.

## Komponente E

Die Komponente E umfasst ein oder mehrere thermoplastische Vinyl(Co)Polymerisate E.1 und/oder Polyalkylenterephthalate E.2.

Geeignet sind als Vinyl(Co)Polymerisate F.1 Polymerisate von mindestens einem Monomeren aus der Gruppe der Vinylaromaten, Vinylcyanide (ungesättigte Nitrile), ungesättigte Carbonsäuren sowie Derivate (wie Ester, Anhydride und Imide) ungesättigter Carbonsäuren. Insbesondere geeignet sind (Co)Polymerisate aus

E.1.1 50 bis 99, vorzugsweise 60 bis 80 Gew.-Teilen Vinylaromaten und/oder kernsubstituierten Vinylaromaten (wie Styrol, $\alpha$-Methylstyrol, p-Methylstyrol, p-Chlorstyrol), und

E.1.2 1 bis 50, vorzugsweise 20 bis 40 Gew.-Teilen Vinylcyanide (ungesättigte Nitrile, wie Acryl-nitril und Methacrylnitril) und/oder ungesättigte Carbonsäuren (wie Acrylsäure und Maleinsäure) und/oder Derivate (wie Anhydride und Imide) ungesättigter Carbonsäuren (beispielsweise Maleinsäureanhydrid und N-Phenylmaleinimid).

Die Vinyl(co)polymerisate E.1 sind harzartig, thermoplastisch und kautschukfrei. Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente E.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte. Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-$\beta$-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im Allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

## Weitere Zusatzstoffe F

Die Formmassen können wenigstens ein weiteres der üblichen Additive, wie z.B. Gleit- und Entformungsmittel, Nukleiermittel, Antistatika, Stabilisatoren, Farbstoffe und Pigmente sowie Füll- und Verstärkungsstoffe enthalten.

Die Komponente F umfasst auch feinstteilige anorganische Verbindungen, die sich durch einen durchschnittlichen Teilchendurchmesser von kleiner oder gleich 200 nm, bevorzugt kleiner oder gleich 150 nm, insbesondere von 1 bis 100 nm auszeichnen. Geeignete feinstteilige anorganische Verbindungen bestehen vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe, oder aus Verbindungen dieser Metalle mit wenigstens einem Element ausgewählt aus Sauerstoff, Wasserstoff, Schwefel, Phosphor, Bor, Kohlenstoff, Stickstoff oder Silicium. Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate. Bevorzugt bestehen die feinstteiligen anorganischen Verbindungen aus Oxiden, Phosphaten, Hydroxiden, vorzugsweise aus $TiO_2$, $SiO_2$, $SnO_2$, ZnO, ZnS, Böhmit, $ZrO_2$, $Al_2O_3$, Aluminiumphosphate, Eisenoxide, ferner TiN, WC, AlO(OH), $Fe_2O_3$ Eisenoxide, $NaSO_4$, Vanadianoxide, Zinkborat, Silikate wie Al-Silikate, Mg-Silikate, ein-, zwei-, dreidimensionale Silikate und Talk. Mischungen und dotierte Verbindungen sind ebenfalls verwendbar. Des weiteren können diese feinstteilige anorganische Verbindungen mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen. Besonders bevorzugt sind hydrathaltige Aluminiumoxide (z.B. Böhmit) oder $TiO_2$.

Teilchengröße und Teilchendurchmesser der anorganischen Partikel bedeutet den mittleren Teilchendurchmesser $d_{50}$, z.B. ermittelt durch Sedimentationsmessungen über die Absetzgeschwindigkeit der Partikel beispielsweise in einem Sedigraph.

Die anorganischen Verbindungen können als Pulver, Pasten, Sole Dispersionen oder Suspensionen vorliegen. Durch Ausfällen können aus Dispersionen, Sole oder Suspensionen Pulver erhalten werden.

Die anorganischen Verbindungen können nach üblichen Verfahren in die thermoplastischen Formmassen eingearbeitet werden, beispielsweise durch direktes Kneten oder Extrudieren von Formmassen und den feinstteiligen anorganischen Verbindungen. Bevorzugte Verfahren stellen die Herstellung eines Masterbatch, z.B. in Flammschutzadditiven und wenigstens einer Komponente der Formmassen in Monomeren oder Lösungsmitteln, oder die Cofällung von einer thermoplastischen Komponente und den feinstteiligen anorganischen Verbindungen, z.B. durch Cofällung einer wässrigen Emulsion und den feinstteiligen anorganischen Verbindungen dar, gegebenenfalls in Form von Dispersionen, Suspensionen, Pasten oder Solen der feinstteiligen anorganischen Materialien.

Die Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert. Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die thermoplastischen Zusammensetzungen und Formmassen eignen sich aufgrund ihrer ausgezeichneten Balance aus hoher Schlagzähigkeit bei tiefen Temperaturen, guter Flammwidrigkeit bei dünnen Wandstärken und einer exzellenten chemischen Beständigkeit zur Herstellung von Batteriemodulgehäusen oder Batteriepackgehäusen oder Teilen davon.

Bei einer Ausführungsform ist Komponente C ausgewählt aus Phosphorverbindungen gemäß Formel (VII),

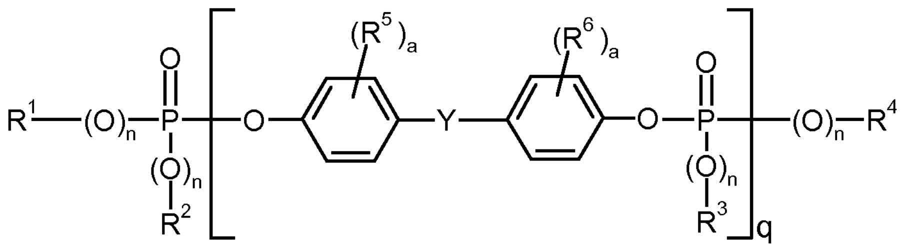

(VII)

worin

$R^1$, $R^2$, $R^3$ und $R^4$, unabhängig voneinander gegebenenfalls durch Halogen substituiertes $C_1$-$C_8$-Alkyl, jeweils gegebenenfalls durch Halogen und/oder Alkyl substituiertes $C_5$-$C_6$-Cycloalkyl, $C_6$-$C_{10}$-Aryl oder $C_7$-$C_{12}$-Aralkyl,
n unabhängig voneinander 0 oder 1,
a unabhängig voneinander 0, 1, 2, 3 oder 4,
q 0 bis 30
R5 und R6 unabhängig voneinander $C_1$-$C_4$-Alkyl, vorzugsweise Methyl, oder Halogen, vorzugsweise Chlor und/oder Brom, und
Y $C_1$-$C_7$-Alkyliden, $C_1$-$C_7$-Alkylen, $C_5$-$C_{12}$-Cycloalkylen, $C_5$-$C_{12}$-Cycloalkyliden, - O-, -S-, -SO-, $-SO_2-$ oder -CO- bedeuten,

Bei einer weiteren Ausführungsform, bei der die Polycarbonatzusammensetzung die Komponenten A + B + C und optional die Komponenten D, E und/oder F enthält, beträgt der Anteil der Komponente B 9,0 bis 11,0 Gew.-Teile (bezogen auf die Summe der Komponenten A + B+ C).

Bei einer weiteren Ausführungsform, bei der die Polycarbonatzusammensetzung die Komponenten A + B* + C und optional die Komponenten D, E und/oder F enthält, beträgt der Anteil der Komponente B* 9,0 bis 11,0 Gew.-Teile (bezogen auf die Summe der Komponenten A + B* + C).

Bei einer weiteren Ausführungsform beträgt der Anteil der Komponente C 4,0 bis 11,0 Gew.-Teile (bezogen auf die Summe der Komponenten A + B + C bzw. A + B* + C).

Bei einer weiteren Ausführungsform enthält die Polycarbonatzusammensetzung als Komponente C eine Mischung aus einem Monophosphat und einem Oligophosphat gemäß Formel (VII), wobei der Durchschnittswert von q 1,06 bis 1,15 ist.

Bei einer weiteren Ausführungsform beträgt der Anteil der Komponente D 0,1 bis 0,6 Gew.-Teile (bezogen auf die Summe der Komponenten A + B + C bzw. A + B* + C).

Bei einer weitere Ausführungsform enthält die Polycarbonatzusammensetzung als Komponente F mindestens eine Additive ausgewählt aus der Gruppe bestehend aus Gleit- und Entformungsmittel, Nukleiermittel, Antistatika, Stabilisatoren, Farbstoffe, Pigmente, Füllstoffe, Verstärkungsstoffe und feinstteilige anorganische Verbindungen, wobei die feinstteiligen anorganischen Verbindungen einen durchschnittlichen Teilchendurchmesser von kleiner oder gleich 200 nm aufweisen.

Neben bzw. anstelle von Polycarbonatmaterialien können die Batteriemodulgehäuse auch andere geeignete Kunststoffe, insbesondere duroplastische oder thermoplastische Kunststoffe, wie zum Beispiel Polypropylene (PP), Polyamide (PA), Polybutylenterephthalate (PBT), Acrylnitril-Butadien-Styrol (ABS), PA/ABS-Gemische, PC/ABS-Gemische, PC-ASA(Acrylester-Styrol-Acrylnitril)-Gemische, oder weitere Mischungen daraus, umfassen. Weiterhin sind für die Batteriemodulgehäuse insbesondere flammgeschützte Thermoplaste, beispielsweise die zuvor genannten Kunststoffe unter Zugabe von Flammschutzmitteln, geeignet.

Bei einer weiteren Ausführungsform des Batteriemoduls umfasst das Batteriemodul die vorgegebene Anzahl von Batteriezellen, wobei die einzelnen Batteriezellen in den Aufnahmen aufgenommen sind. Bei N Aufnahmen umfasst das Batteriemodul demnach N Batteriezellen, wobei in jeder Aufnahme für eine Batteriezelle eine Batteriezelle angeordnet ist. Bei den Batteriezellen kann es sich insbesondere um Lithiumionenzellen handeln, beispielsweise vom Typ 18650 oder alternativ vom Typ 10180, 10280, 10440, 14250, 14500, 14560, 15270, 16340, 17340, 17500, 17670, 18350, 18500, 19670, 25500, 26650 oder 32600.

Wenn im Ausweichbereich des Batteriemoduls ein elastisches Element angeordnet ist, so ist dieses vorzugsweise so an mindestens eine benachbarte Batteriezelle angepasst, dass es bei einer Beschleunigung der benachbarten Batteriezelle von bis zu 10 g um höchstens 10 % seiner ursprünglichen Ausdehnung komprimiert wird, wobei g vorliegend die Schwerebeschleunigung der Erde ist ($g \approx 9{,}81\ m/s^2$). Dazu kann das elastische Element insbesondere so ausgebildet sein, dass sich bei einer Komprimierung um höchstens 10 % eine Rückstellkraft von mindestens $10 \cdot g \cdot M_{BZ}$ ergibt, wobei $M_{BZ}$ das Gewicht einer Batteriezelle ist. Weiter bevorzugt ist das elastische Element so an mindestens eine Batteriezelle angepasst, dass es bei einer Beschleunigung der benachbarten Batteriezelle von mindestens 12 g, insbesondere von mindestens 15 g, um mindestens 50 % seiner ursprünglichen Ausdehnung komprimiert wird.

Weist das Batteriemodul an einer Aufnahme ein Kragenelement bzw. ein Halteelement auf, so sind diese bevorzugt so ausgestaltet, dass sie bei einer Beschleunigung der Batteriezelle in der Aufnahme von mehr als 12 g, insbesondere mehr als 15 g, die Batteriezelle freigeben, beispielsweise durch umkippen, abbrechen des Kragenelements bzw. Halteelements oder auf andere Weise.

Die oben genannte Aufgabe wird weiterhin bei einem Batteriepack mit einem Batteriepackgehäuse, wobei das Batteriepackgehäuse einen Batteriepackinnenraum umschließt und wobei das Batteriepackgehäuse Batteriepackinnenraum-seitig mindestens eine Aufnahme für ein Batteriemodul aufweist, erfindungsgemäß zumindest teilweise dadurch gelöst, dass das Batteriepack ein in der Aufnahme aufgenommenes erfindungsgemäßes Batteriemodul aufweist.

In Elektrofahrzeuge werden häufig keine einzelnen Batteriemodule, sondern Batteriepacks eingebaut, in denen mehrere Batteriemodule in einem Batteriepackgehäuse zusammengefasst sind. Indem ein solches Batteriepack mit erfindungsgemäßen Batteriemodulen ausgestattet wird, werden auch beim Batteriepack die zuvor für das erfindungsgemäße Batteriemodul beschriebenen Vorteile erreicht.

Zur Aufnahme der Batteriemodule kann das Batteriepack Batteriepackinnenraum-seitig, d.h. auf der Innenseite des Batteriepackgehäuses, beispielsweise Stützen, Schienen, Vertiefungen oder andere Haltemittel aufweisen.

Bei einer Ausführungsform des Batteriepacks ist das Batteriepackgehäuse zumindest teilweise elastisch ausgebildet. Vorzugsweise sind mindestens eine Seitenwand oder mehrere Seitenwände oder im Wesentlichen das gesamte Batteriepackgehäuse elastisch ausgebildet. Auf diese Weise wird erreicht, dass das Batteriepackgehäuse bei einer großen Krafteinwirkung wie bei einem Crash zumindest teilweise elastisch verformt wird, so dass Raum für eine elastische Verformung eines im Batteriepackgehäuse angeordneten Batteriemoduls bereit gestellt wird. Hinsichtlich der Vorteile einer elastischen Verformung des Batteriemoduls wird auf die obige Beschreibung des Batteriemoduls verwiesen.

Um die elastische Verformung eines Batteriemoduls zu ermöglichen, weist der elastische Teil des Batteriepackgehäuses bevorzugt ein Elastizitätsmodul von maximal 80.000 N/mm$^2$, insbesondere von maximal 30.000 N/mm$^2$ auf. Andererseits weist der elastische Teil vorzugsweise einen Elastizitätsmodul von mindestens 750 N/mm$^2$, bevorzugt von mindestens 1000 N/mm$^2$, insbesondere von mindestens 2000 N/mm$^2$ auf, um im Normalbetrieb, d.h. ohne Einwirkung großer äußerer Kräfte wie bei einem Crash, eine sichere und feste Einhausung der Batteriemodule zu gewährleisten.

Bei einer weiteren Ausführungsform des Batteriepacks weist das Batteriepackgehäuse zumindest teilweise eine normierte Steifigkeit von weniger als 140.000 Nmm$^2$, vorzugsweise weniger als 50.000 Nmm$^2$, insbesondere weniger als 25.000 Nmm$^2$ auf. Auf diese Weise können vergleichbare Vorteile erzielt werden wie für ein zumindest teilweise elastisch ausgebildetes Batteriepackgehäuse. Vorzugsweise weist mindestens eine Seitenwand oder mehrere Seitenwände oder im Wesentlichen das gesamte Batteriepackgehäuse die angegebene Biegesteifigkeit auf.

Für das Batteriepackgehäuse wird vorzugweise ein Material mit einer Bruchdehnung nach DIN ISO 527-1,-2 von mindestens 2 %, vorzugsweise von mindestens 15 %, insbesondere von mindestens 30 %, verwendet.

Bei einer weiteren Ausführungsform des Batteriepacks weist das Batteriepack im Batteriepackinnenraum mindestens auf einer Seite des Batteriemoduls einen Ausweichbereich auf, so dass das Batteriemodul auf dieser Seite von dem Batteriepackgehäuse und anderen Batteriemodulen im Batteriepack beabstandet ist. Durch einen solchen Ausweichbereich wird gewährleistet, dass im Fall einer hohen Krafteinwirkung wie bei einem Crash eine ausreichende Verformung des Batteriemoduls innerhalb des Batteriepacks ermöglicht. So kann beispielsweise der Deckel, der Boden oder eine Seitenwand des Batteriemodulgehäuses in den Ausweichbereich des Batteriepacks hineingewölbt werden, so dass innerhalb des Batteriemoduls selbst ein Ausweichbereich für die Batteriezellen geschaffen werden kann bzw. die Batteriezellen innerhalb des Batteriemoduls verschiebbar sind, um der auf sie einwirkenden Kraft auszuweichen.

Die Größe des Ausweichbereichs, d. h. der Abstand des Batteriemoduls zum Batteriepackgehäuse oder anderen Batteriemodulen beträgt vorzugsweise mindestens 30 mm bzw. mindestens 20 % der Größe des Batteriemoduls in Richtung der Seite, auf welcher der Ausweichbereich angeordnet ist.

Im Ausweichbereich des Batteriepacks kann ein elastisches Element wie beispielsweise ein Schaum oder ein Federelement angeordnet sein, um die Batteriemodule im Normalbetrieb sicher innerhalb des Batteriepacks zu fixieren.

Bei einer weiteren Ausführungsform des Batteriepacks umfasst das Batteriepackgehäuse ein Polycarbonatmaterial. Wie zuvor in Bezug auf das Batteriemodulgehäuse ausgeführt, weisen Polycarbonatmaterialien eine gute Elastizität und eine hohe Zähigkeit auf, und zwar insbesondere auch bei tiefen Temperaturen von -30 °C, die beim Einsatz im Elektrofahrzeug auftreten können. Weiterhin ist ein guter Flammenschutz dieser Materialien möglich.

Als Polycarbonatmaterialien kommen für das Batteriepackgehäuse grundsätzlich die bereits zuvor für das Batteriemodulgehäuse aufgeführten Polycarbonatzusammensetzungen in Frage, so dass auf die diesbezügliche Beschreibung verwiesen wird.

Weiterhin kommen für das Batteriepackgehäuse auch die übrigen, zuvor für das Batteriemodulgehäuse genannten Materialien, insbesondere die flammgeschützten Thermoplaste, in Frage. Auch sind, wie für das Batteriemodul beschriebene, die oben genannten faserverstärkte Composite Materialien bzw. Faserverbundwerkstoffe einsetzbar.

Das Batteriepackgehäuse kann weiterhin auch einen metallischen Werkstoff, insbesondere eine Aluminium- oder Stahllegierung, umfassen. In Kombination mit Batteriemodulgehäusen aus Kunststoff kann auf diese Weise ein hybrider Aufbau erreicht werden, bei dem die Batteriemodule durch ein steifes Batteriepackgehäuse geschützt werden und die Batteriezellen bei Versagen dieses Schutzes den übertragenen Kräften ausweichen können.

Die oben genannte Aufgabe wird weiterhin bei einem Elektrofahrzeug erfindungsgemäß zumindest teilweise dadurch gelöst, dass das Elektrofahrzeug ein erfindungsgemäßes Batteriemodul und/oder ein erfindungsgemäßes Batteriepack aufweist.

Durch das Vorsehen eines solchen Batteriemoduls bzw. Batteriepacks in einem Elektrofahrzeug kann aufgrund der erhöhten Betriebssicherheit des Batteriemoduls bzw. des Batteriepacks entsprechend auch die Betriebssicherheit des Elektrofahzeugs verbessert werden. Hinsichtlich der übrigen Vorteile wird auf die vorige Darstellung hinsichtlich des Batteriemoduls und des Batteriepacks verwiesen.

Weitere Merkmale und Vorteile der vorliegenden Erfindung können der nachfolgenden Beschreibung von Ausführungsbeispielen entnommen werden, wobei auf die beigefügte Bezeichnung Bezug genommen wird.

In der Zeichnung zeigen

Fig. 1 ein Ausführungsbeispiel eines erfindungsgemäßen Batteriemoduls sowie eines erfindungsgemäßen Batteriepacks,

Fig. 2 das Ausführungsbeispiel aus Figur 1, dargestellt nach einer starken Krafteinwirkung wie bei einem Crash,

Fig. 3 eine Detailansicht eines Ausführungsbeispiels eines erfindungsgemäßen Batteriemoduls und

Fig. 4 ein Ausführungsbeispiel eines erfindungsgemäßen Batteriepacks.

Figur 1 zeigt ein Ausführungsbeispiel eines erfindungsgemäßen Batteriemoduls sowie eines erfindungsgemäßen Batteriepacks im Horizontalschnitt in Aufsicht.

Das Batteriepack 2 weist ein Batteriepackgehäuse 4 auf, welches auf einem Polycarbonatmaterial basiert und ein Elastizitätsmodul von weniger als 50.000 $N/mm^2$ aufweist und vorliegend im Wesentlichen vollständig elastisch ist. Das Batteriepackgehäuse 4 umschließt ein Batteriepackinnenraum 6, in dem sechs Batteriemodule 8a-f in sechs dafür vorgesehenen Aufnahmen (nicht dargestellt) angeordnet sind. Die Batteriemodule 8a-f sind im vorliegenden Ausführungsbeispiel identisch ausgebildet, sie können jedoch auch unterschiedlich ausgebildet sein. Der Aufbau der Batteriemodule 8a-f wird nachfolgend exemplarisch am Batteriemodul 8a beschrieben.

Batteriemodul 8a weist ein Batteriemodulgehäuse 10a auf, welches auf einem Polycarbonatmaterial basiert und ein Elastizitätsmodul von weniger als 50.000 $N/mm^2$ aufweist und vorliegend ebenfalls im Wesentlichen vollständig elastisch ist. Das Batteriemodulgehäuse 10a umschließt einen Batteriemodulinnenraum 12a, in dem 28 Batteriezellen 14 in dafür vorgesehenen 28 Aufnahmen (nicht dargestellt) angeordnet sind. Die Batteriezellen 14 sind reihenweise versetzt angeordnet, um eine möglichst hohe Packungsdichte zu erzielen. Weiterhin weist das Batteriemodul 8a im Batteriemodulinnenraum 12a einen Ausweichbereich 16 auf, in dem vier elastische Elemente 18 angeordnet sind. Die elastischen Elemente 18 sind im vorliegenden Ausführungsbeispiel jeweils als Schaumzylinder ausgebildet. Es sind jedoch auch andere Formen und Arten von elastischen Elementen denkbar. Weiterhin sind die elastischen Elemente 18 im dargestellten Ausführungsbeispiel im Randbereich des Batteriemodulinnenraums 12a angeordnet. Alternativ können die elastischen Elemente 18 jedoch auch an anderen Stellen im Batteriemodulinnenraum 12a angeordnet sein, beispielsweise mittig im Batteriemodul und umgeben von Batteriezellen 14.

Das Verhalten des in Figur 1 dargestellten Ausführungsbeispiels eines Batteriepacks 2 mit den Batteriemodulen 8a-f bei einer großen äußeren Krafteinwirkung wie bei einem Crash wurde mittels einer Computersimulation untersucht. Figur 1 zeigt hierbei die Situation des Batteriepacks 2 vor einem Crash. Durch die in Figur 1 eingezeichnete Linie wird eine Kräftefront 20 repräsentiert, welche bei einem Crash lokal auf das Batteriepack 2 einwirken könnte.

Die Computersimulation des in Figur 1 dargestellten Batteriepacks erfolgte mit CAE Methoden (Computer Aided Engineering). Hierzu wurde die Software Simulia Abaqus 6.12-2 von der Firma Dassault Systeme verwendet.

Die Simulation erfolgte in Anlehnung an den Pfahl-Seitenaufprall, wie er durch die Euro NCAP bzw. in der FMVSS 201 beschrieben wird. Da in der Simulation nur das Batteriepack 2 mit den Batteriemodulen 8a-f berücksichtigt wurde, jedoch keine weiteren Steifigkeiten anderer Fahrzeugkomponenten wie bei einem Gesamtfahrzeugmodell, wurde der beim Pfahl-Seitenaufprall pfahlförmige Impaktor (mit einem Durchmesser von d = 254mm) als masseloser Starrkörper mit einer konstanten Vorschubgeschwindigkeit in das Batteriepack 2 gefahren. Die Vorschubgeschwindigkeit betrug v = 29 km/h. Die in Fig. 1 dargestellte Kräftefront entspricht bei dieser Simulation dem Rand des pfahlförmigen Impaktors im Moment vor dem Aufprall.

Da die genauen Steifigkeiten einer Batteriezelle 14 nicht bekannt waren, wurde jede Zelle durch Schalenelemente aus Stahl mit einem Durchmesser von d = 40mm und einer Wanddicke von t = 5mm abgebildet. Mit dieser Steifigkeit ist gewährleistet, dass sich die einzelnen Batteriezellen während der Simulation nicht verformen und jeweils einen ideal zylindrischen Querschnitt behalten. Damit die Batteriezellen 14, der pfahlförmige Impaktor sowie das Batteriepackgehäuse 4 und die Batteriemodulgehäuse 10a-f in der Simulation interagieren konnten, wurden Kontakte zwischen dem pfahlförmigen Impaktor und dem Batteriepackgehäuse 4, den Batteriezellen 14 untereinander, den Batteriezellen 14 mit dem jeweiligen Batteriemodulgehäuse 10a-f, den Batteriezellen 14 mit den elastischen Elementen 18 sowie zwischen den Batteriemodulgehäusen 10a-f untereinander und mit dem Batteriepackgehäuse 4 definiert.

Damit der Kontakt der Batteriezellen 14 aus Stahl in der Simulation nicht zu unzulässig hohen Schwingungen führte, wurde ein elastisches Dämpfungselement mit einem E-Modul von $20N/mm^2$ und einer Dicke von 1 mm um die Batteriezellen 14 gelegt. Jede horizontale Reihe von Batteriezellen 14 wies auf der linken Seite jeweils ein elastisches Element 18 aus thermoplastischem Kunststoff mit einem Elastizitätsmodul von E = 2200 MPa auf.. Die elastischen Elemente 18 waren geometrisch so gestaltet, dass sie in Höhe und Durchmesser den Ausmaßen einer Batteriezelle 14 entsprachen. Die Wanddicke der elastischen Elemente 18 betrug t=1.5mm. Die Batteriemodulgehäuse 10a-f und das Batteriepackgehäuse 4 bestanden aus dem gleichen thermoplastischen Kunststoff wie die elastischen Elemente 18, wiesen jedoch eine Dicke von t = 5 mm auf.

Figur 2 zeigt das Batteriepack 2 aus Figur 1, und zwar dargestellt nach einer starken Krafteinwirkung wie bei einem Crash. Die Verformung des Batteriepacks 2 und seiner Bestandteile aufgrund der Krafteinwirkung wurde mithilfe der zuvor beschriebenen Computersimulation berechnet, bei der eine große Krafteinwirkung auf das Batteriepack 2 durch die in das Batteriepack 2 eindringenden Kräftefront 20 simuliert wurde. Aufgrund der simulierten Krafteinwirkung an der Kräftefront 20 zeigen sowohl das Batteriepackgehäuse 4, als auch die Batteriemodulgehäuse wie 10a erhebliche Verformungen. Wie aus Figur 2 ersichtlich wird, wurden das elastische Batteriepackgehäuse und die elastischen Batteriemodulgehäuse insbesondere nicht nur lokal im Bereich der Kräftefront 20, sondern auch in von der Kräftefront 20 beabstandeten Bereichen verformt. Weiterhin wurden die elastischen Elemente 18 innerhalb der Batteriemodule 8a-f zum Teil erheblich komprimiert und verformt, so dass Ausweichbereiche geschaffen wurden, in welche die Batteriezellen 14 verschoben werden konnten. Entsprechend zeigt Figur 2, dass sich die einzelnen Batteriezellen 14 zum Teil sehr

weit von ihren ursprünglichen Positionen verschoben haben und so der Krafteinwirkung durch die Kräftefront 20 ausweichen konnten. Es zeigte sich, dass die auf die einzelnen Batteriezellen wirkenden Kräfte gegenüber der von außen wirkenden Kräftefront erheblich reduziert werden konnten, so dass sich das Risiko für eine Beschädigung der Batteriezellen deutlich reduziert hat.

Figur 3 zeigt eine Detailaufnahme eines Batteriemoduls 30 mit einem Batteriemodulgehäuse 32, von dem in Figur 3 ein Bodenabschnitt dargestellt ist. In dem Boden des Batteriemodulgehäuses 32 sind Vertiefungen 34a-b vorgesehen, deren Ausmaße an die im Batteriemodulgehäuse anzuordnenden Batteriezellen 36a-b angepasst sind. Die Batteriezellen 36a-b werden so im Normalbetrieb in den Aufnahmen 34a-b fixiert. Zusätzlich sind auf dem Bodenabschnitt des Batteriemodulgehäuses 32 Kragenelemente 38a-b vorgesehen, welche eine zusätzliche Fixierung der Batteriezellen 36a-b im Normalbetrieb gewährleisten. Im Fall einer großen Krafteinwirkung können die Kragenelemente 38a-b umklappen und so ein Verschieben der Batteriezellen 36a-b im Batteriemodulinnenraum ermöglichen.

Figur 4 zeigt ein weiteres Ausführungsbeispiel eines Batteriepacks im schematischen Querschnitt. Das Batteriepack 50 weist ein zumindest teilweise elastisches Batteriepackgehäuse 52 mit einem Batteriepackinnenraum 54 auf, in dem Batteriemodule 56a-c in dafür vorgesehenen Aufnahmen (nicht dargestellt) angeordnet sind. Die Batteriemodule 56a-c können beispielsweise wie die in Figur 1 dargestellten Batteriemodule ausgebildet sein.

Oberhalb der Batteriemodule 56a-c weist der Batteriepackinnenraum 54 einen Ausweichbereich 58 auf, so dass die Batteriemodule 56a-c in dieser Richtung vom Batteriepackgehäuse 52 beabstandet sind. Durch diesen Ausweichbereich 58 wird gewährleistet, dass im Falle einer großen Krafteinwirkung wie bei einem Crash und einer damit verbundenen Verformung der Batteriemodulgehäuse der Batteriemodule 56a-c genügend Raum vorhanden ist, in den beispielsweise eine sich aufwölbende Decke der Batteriemodulgehäuse dringen kann. Auf diese Weise werden eine elastische Verformung des Batteriemodulgehäuses der Batteriemodule 56a-c und so ein Ausweichen der Batteriezellen in den Batteriemodulen 56a-c vor der von außen wirkenden Kraft ermöglicht, so dass die auf die Batteriezellen wirkende maximale Kraft und damit das Risiko einer Beschädigung der Batteriezellen reduziert werden kann.

Im Folgenden werden noch weitere Beispiele für Polycarbonatzusammensetzungen beschriebene, die für die Herstellung von Batteriemodulgehäusen oder Batteriepackgehäusen oder Teilen davon besonders geeignet sind.

## Beispiele

Komponente A-1

Lineares Polycarbonat auf Basis Bisphenol A mit einer relativen Lösungsviskosität von $\eta_{rel}$ = 1,28 gemessen in $CH_2Cl_2$ als Lösungsmittel bei 25°C und einer Konzentration von 0,5g/100ml.

Komponente B-1:

Silikon-Acrylat-Kompositkautschuk mit folgender Zusammensetzung:
Polymethylmethacrylat/Silikonkautschuk/Acrylatkautschuk: 14/31/55 Gew.-%

Komponente B-2:

Silikon-Acrylat-Kompositkautschuk mit folgender Zusammensetzung:
Polymethylmethacrylat/Silikonkautschuk/Acrylatkautschuk: 11/82/7 Gew.-%

Komponente B*:

ABS-Polymerisat, hergestellt durch Emulsions-Polymerisation von 43 Gew.-% (bezogen auf das ABS-Polymerisat) einer Mischung aus 27 Gew.-% Acrylnitril und 73 Gew.-% Styrol in Gegenwart von 57 Gew.- % (bezogen auf das ABS-Polymerisat) eines teilchenförmigen vernetzten Polybutadienkautschuks (mittlerer Teilchendurchmesser $d_{50}$ = 0,35 $\mu$m), wobei das Pfropfpolymerisat ca. 15 % freies, lösliches SAN enthält. Der Gelgehalt beträgt 72%.

Komponente C:

Bisphenol-A basierendes Oligophosphat (Reofoss BAPP) gemäß Formel (VIa)

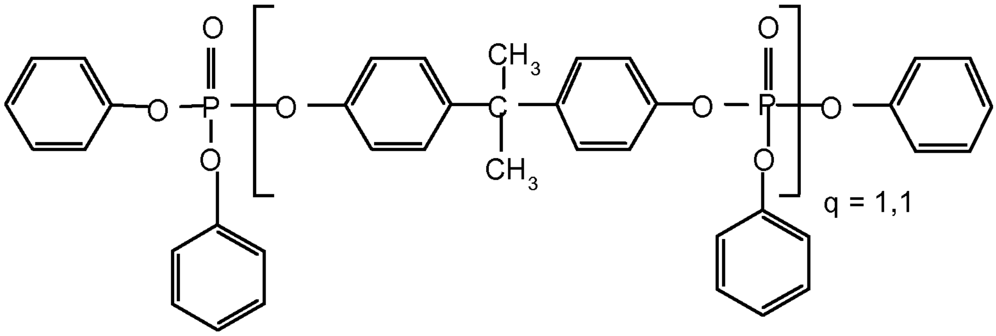

(VIa)

Komponente D:

Polytetrafluorethylen-Pulver, CFP 6000 N, Fa. Du Pont.

Komponente F:

F-1: Pentaerythrittetrastearat als Gleit-/Entformungsmittel
F-2: Phosphitstabilisator, Phosphitstabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)phenol).

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert. Die fertigen Granulate werden auf einer Spritzgussmaschine zu den entsprechenden Probekörpern verarbeitet (Massetemperatur 240 °C, Werkzeugtemperatur 80°C, Fließfrontgeschwindigkeit 240 mm/s).
Auf die gleiche Weise werden auf einem Zweischneckenextruder (ZSK-25) (Fa. Werner und Pfleiderer) die in Tabelle 2 aufgeführten Einsatzstoffe bei einer Drehzahl von 225 Upm und einem Durchsatz von 20 kg/h bei einer Maschinentemperatur von 260°C compoundiert und granuliert. Die fertigen Granulate werden auf einer Spritzgussmaschine zu den entsprechenden Probekörpern verarbeitet (Massetemperatur 240 °C, Werkzeugtemperatur 80°C, Fließfrontgeschwindigkeit 240 mm/s).
Zur Charakterisierung der Eigenschaften der Probekörper wurden folgende Methoden angewandt:
Die **Fließfähigkeit** wurde nach ISO 11443 (**Schmelzeviskosität**) bestimmt.
Die **Kerbschlagzähigkeit** ak wurde gemessen nach ISO 180/1A an einem einseitig angespritzten Prüfstab der Dimension 80x10x4 mm bei den angegebenen Meßtemperaturen.
Die **Wärmeformbeständigkeit** wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80x10x4 mm.
Das **Brandverhalten** wird nach UL 94V an Stäben der Abmessung 127 x 12,7 x 1,5 mm gemessen.
Die **Reißdehnung** und **Zug-E-Modul** wurden nach DIN EN ISO 527 an Stäben der Abmessung 170,0 x 10,0 x 4,0 mm gemessen.
Unter Chemikalienbeständigkeit (**ESC-Verhalten**) wird die Zeit bis zum Bruch bei 2,4 % Randfaserdehnung nach Lagerung des Probekörpers in den gegebenen Testsubstanzen bei Raumtemperatur an einem einseitig angespritzten Prüfstab der Dimension 80x10x4 mm angegeben.

Tabelle 1: Zusammensetzungen und ihre Eigenschaften

| **Komponenten** | **Gew.-%** | **1** | **2** | **3** | **4** |
|---|---|---|---|---|---|
| A1 | | 84,10 | 78,10 | 84,10 | 78,10 |
| B1 | | | | 9,00 | 11,00 |
| B2 | | 9,00 | 11,00 | | |
| C | | 6,00 | 10,00 | 6,00 | 10,00 |
| D | | 0,40 | 0,40 | 0,40 | 0,40 |

(fortgesetzt)

| Komponenten | Gew.-% | 1 | 2 | 3 | 4 |
|---|---|---|---|---|---|
| F1 | | 0,40 | 0,40 | 0,40 | 0,40 |
| F2 | | 0,10 | 0,10 | 0,10 | 0,10 |
| Summe | | 100,00 | 100,00 | 100,00 | 100,00 |
| **Eigenschaften** | Einheiten | | | | |
| ak ISO 180/1A bei RT | [kJ/m$^2$] | 59 | 57 | 60 | 58 |
| ak ISO 180/1A bei-20°C | [kJ/m$^2$] | 45 | 42 | 42 | 37 |
| ak ISO 180/1A bei-40°C | [kJ/m$^2$] | 32 | 30 | 20 | 18 |
| Vicat B 120 | [°C] | 120 | 109 | 120 | 109 |
| UL 94 V /1,5 mm | | V-0 | V-0 | V-0 | V-0 |
| Nachbrennzeit | [s] | 10 | 12 | 20 | 16 |
| Schmelzeviskosität 260°C/1000s-1 | [Pas] | 370 | 297 | 366 | 292 |
| ESC bei 2,4% Toluol/Isopropanol (60:40) | h:min | 14:08 | 30:00 | 7:00 | 14:36 |
| ESC bei 2,4% Rapsöl | h:min | 7:45 | 2:45 | 7:00 | 2:39 |
| ESC bei 2,4% Glykol/Wasser (50:50) | h:min | 125:50 | 124:00 | 122:20 | 67:00 |
| ESC bei 2,4% Hydrauliköl | h:min | 168:00 | 168:00 | 168:00 | 168:00 |
| Zug-E-Modul | N/mm$^2$ | 2248 | 2258 | 2242 | 2263 |
| Reißdehnung | % | 106 | 110 | 103 | 110 |

Tabelle 2: Zusammensetzungen und ihre Eigenschaften

| Komponenten | Gew.-% | 5 | 6 |
|---|---|---|---|
| | | | |
| A1 | | 84,10 | 78,10 |
| B* | | 9,00 | 11,00 |
| C | | 6,00 | 10,00 |
| D | | 0,40 | 0,40 |
| F-1 | | 0,40 | 0,40 |
| F-2 | | 0,10 | 0,10 |
| | | | |
| Summe | | 100,00 | 100,00 |
| **Eigenschaften** | Einheiten | | |
| ak ISO 180/1A bei RT | [kJ/m$^2$] | 52 | 57 |
| ak ISO 180/1A bei -20°C | [kJ/m$^2$] | 34 | 33 |
| ak ISO 180/1A bei -40°C | [kJ/m$^2$] | 18 | 17 |
| an Bindenaht | [kJ/m$^2$] | 74 | 73 |
| Vicat B 120 | [°C] | 120 | 110 |
| UL 94 V /1,5 mm | | V-1 | V-1 |
| Nachbrennzeit | [s] | 54 | 50 |

(fortgesetzt)

| **Eigenschaften** | Einheiten | | |
|---|---|---|---|
| UL 94 V /2,5 mm | | V-0 | V-0 |
| Nachbrennzeit | [s] | 15 | 11 |
| Schmelzevisko. | | | |
| 260°C/1000s-1 | [Pas] | 415 | 319 |
| ESC bei 2,4% Toluol/Isopropanol | h:min | 2:42 | 4:01 |
| ESC bei 2,4% Rapsöl | h:min | 3:57 | 2:05 |
| ESC bei 2,4% Glykol/Wasser (50·50) | h:min | 108:00 | 149:00 |
| ESC bei 2,4% Hydrauliköl | h:min | 168:00 | 168:00 |
| Reißdehnung | % | | |
| Zug-E-Modul | $N/mm^2$ | 2340 | 2350 |
| Mischung Toluol/Isopropanol: 60/40 Gew.-% | | | |

Versuche haben gezeigt, dass mit den zuvor genannten Polycarbonatzusammensetzungen Batteriemodulgehäuse herstellbar sind, die zumindest teilweise ein Elastizitätsmodul von maximal 80.000 $N/mm^2$, insbesondere von maximal 30.000 $N/mm^2$ aufweisen bzw. zumindest teilweise eine normierte Steifigkeit von weniger als 140.000 $Nmm^2$, vorzugsweise weniger als 50.000 $Nmm^2$, insbesondere weniger als 25.000 $Nmm^2$, aufweisen.

## Patentansprüche

**1.** Batteriemodul (8a-f, 30, 56a-c),

- mit einem Batteriemodulgehäuse (10a, 32),
- wobei das Batteriemodulgehäuse (10a, 32) einen Batteriemodulinnenraum (12a) umschließt und
- wobei das Batteriemodulgehäuse (10a, 32) Batteriemodulinnenraum-seitig Aufnahmen (34ab) für eine vorgegebene Anzahl von Batteriezellen (14, 36a-b) aufweist, **dadurch gekennzeichnet, dass**
- das Batteriemodul (8a-f, 30, 56a-c) im Batteriemodulinnenraum (12a) zusätzlich zu den Aufnahmen (34a-b) einen Ausweichbereich (16) aufweist, der so dimensioniert und angeordnet ist, dass mindestens eine in einer Aufnahme aufgenommene Batteriezelle (14, 36ab) zumindest teilweise in den Ausweichbereich (16) verschiebbar ist, wobei das Batteriemodulgehäuse (10a, 32) ein Polycarbonatmaterial umfasst, welches eine Polycarbonatzusammensetzung ist, welche die nachfolgenden Komponenten A + B + C oder A + B* + C sowie jeweils optional die Komponenten D, E und/oder F mit den jeweils angegebenen Anteilen enthält:

A) 70,0 bis 90,0 Gew.-Teile (bezogen auf die Summe der Gew.-Teile der Komponenten A + B + C bzw. A + B* + C) lineares und/ oder verzweigtes aromatisches Polycarbonat und/oder aromatisches Polyestercarbonat,
B) 6,0 bis 15,0 Gew.-Teile (bezogen auf die Summe der Gew.-Teile der Komponenten A + B+ C) mindestens eines Pfropfpolymerisats mit

B.1) 5 bis 40 Gew.-%, vorzugsweise 5 bis 30 Gew.-%, besonders bevorzugt 10 bis 20 Gew.-% (jeweils bezogen auf das Pfropfpolymerisat B) einer Hülle aus mindestens einem Vinylmonomeren und
B.2) 95 bis 60 Gew.-%, vorzugsweise 95 bis 70 Gew.-%, besonders bevorzugt 80 bis 90 Gew.-% (jeweils bezogen auf das Pfropfpolymerisat B) einer oder mehrerer Pfropfgrundlagen aus Silikon-Acrylat-Kompositkautschuk,

B*) 6,0 bis 15,0 Gew.-Teile (bezogen auf die Summe der Gew.-Teile der Komponenten A + B* + C) mindestens eines Pfropfpolymerisats mit

B*.1) 5 bis 95, vorzugsweise 30 bis 80 Gew.-Teile, einer Mischung aus

B*.1.1) 50 bis 95 Gew.-Teilen Styrol, α-Methylstyrol, methylkernsubstituiertem Styrol, C1-C8-Alkylmethacrylat, insbesondere Methylmethacrylat, C1-C8-Alkylacrylat, insbesondere Methylacrylat, oder Mischungen dieser Verbindungen und

B*.1.2) 5 bis 50 Gew.-Teilen Acrylnitril, Methacrylnitril C1-C8-Alkylmethacrylaten, insbesondere Methylmethacrylat, C1-C8-Alkylacrylat, insbesondere Methylacrylat, Maleinsäureanhydrid, C1-C4-alkyl- bzw. -phenyl-N-substituierte Maleinimide oder Mischungen dieser Verbindungen auf

B*.2) 5 bis 95, vorzugsweise 20 bis 70 Gew.-Teilen einer kautschukhaltigen Pfropfgrundlage auf Butadien- oder Acrylatbasis,

C) 2,0 bis 15,0 Gew.-Teile (bezogen auf die Summe der Gew.-Teile der Komponenten A + B+ C bzw. A + B* + C) Phosphorverbindungen ausgewählt aus den Gruppen der Mono- und oligomeren Phosphor- und Phosphonsäureester, Phosphonatamine, Phosphazene und Phosphinate, sowie Mischungen dieser Verbindungen,

D) 0 bis 3,0 Gew.-Teile (bezogen auf die Summe der Gew.-Teile der Komponenten A + B+ C bzw. A + B* + C) Antitropfmittel,

E) 0 - 3,0 Gew.-Teile (bezogen auf die Summe der Gew.-Teile der Komponenten A + B+ C bzw. A + B* + C) thermoplastische Vinyl(Co)Polymerisat (E.1) und/oder Polyalkylenterephthalat (E.2), und

F) 0 bis 20,0 Gew.-Teile (bezogen auf die Summe der Gew.-Teile der Komponenten A + B+ C bzw. A + B* + C) weitere Zusatzstoffe,

wobei die Zusammensetzung vorzugsweise frei ist von kautschukfreiem Polyalkyl(alkyl)acrylat, und wobei alle Gewichtsteilangaben in der vorliegenden Anmeldung so normiert sind, dass die Summe der Gewichtsteile der Komponenten A+B+C bzw. A+B*+C in der Zusammensetzung 100 ergeben.

**2.** Batteriemodul nach Anspruch 1,
**dadurch gekennzeichnet, dass**
das Batteriemodulgehäuse (10a, 32) zumindest teilweise elastisch, vorzugsweise mit einem Elastizitätsmodul von maximal 80.000 N/mm$^2$, insbesondere von maximal 30.000 N/mm$^2$, ausgebildet ist.

**3.** Batteriemodul nach Anspruch 1 oder 2,
**dadurch gekennzeichnet, dass**
das Batteriemodulgehäuse (10a, 32) zumindest teilweise eine normierte Steifigkeit von weniger als 50.000 Nmm$^2$, insbesondere weniger als 25.000 Nmm$^2$ aufweist.

**4.** Batteriemodul nach einem der Ansprüche 1 bis 3,
**dadurch gekennzeichnet, dass**
im Ausweichbereich (16) ein elastisches Element (18), insbesondere ein elastischer Schaum oder ein Federelement, angeordnet ist.

**5.** Batteriemodul nach Anspruch 4,
**dadurch gekennzeichnet, dass**
das elastische Element (18) mit dem Batteriemodulgehäuse (10a, 32) form-, kraft- und/oder stoffschlüssig verbunden ist.

**6.** Batteriemodul nach Anspruch 5,
**dadurch gekennzeichnet, dass**
das elastische Element (18) mit dem Batteriemodulgehäuse (10a, 32) verspritzt ist.

**7.** Batteriemodul nach einem der Ansprüche 1 bis 6,
**dadurch gekennzeichnet, dass**
mindestens eine Aufnahme (34a-b) für eine Batteriezelle (14, 36a-b) zumindest teilweise durch eine Vertiefung (34a-b) im Batteriemodulgehäuse (10a, 32) gebildet wird.

**8.** Batteriemodul nach einem der Ansprüche 1 bis 7,
**dadurch gekennzeichnet, dass**
mindestens eine Aufnahme (34a-b) für eine Batteriezelle (14, 36a-b) zumindest teilweise durch ein am Batteriemodulgehäuse (10a, 32) befestigtes Kragenelement (38a-b) gebildet wird.

**9.** Batteriemodul nach einem der Ansprüche 1 bis 8,
**dadurch gekennzeichnet, dass**
das Batteriemodulgehäuse (10a, 32) und/oder ein im Ausweichbereich (16) angeordnetes elastisches Element (18) einen flammgeschützten Werkstoff, insbesondere einen flammgeschützten Kunststoff, umfasst.

**10.** Batteriemodul nach einem der Ansprüche 1 bis 9,
**dadurch gekennzeichnet, dass**
das Batteriemodul (8a-f, 30, 56a-c) die vorgegebene Anzahl von Batteriezellen (14, 36a-b) umfasst, wobei die einzelnen Batteriezellen (14, 36a-b) in den Aufnahmen aufgenommen sind.

**11.** Batteriepack (2, 50),

- mit einem Batteriepackgehäuse (4, 52),
- wobei das Batteriepackgehäuse (4, 52) einen Batteriepackinnenraum (6, 54) umschließt und
- wobei das Batteriepackgehäuse (4, 52) Batteriepackinnenraum-seitig mindestens eine Aufnahme für ein Batteriemodul (8a-f, 30, 56a-c) aufweist,
**dadurch gekennzeichnet, dass**
- das Batteriepack (2, 50) ein in der Aufnahme aufgenommenes Batteriemodul (8a-f, 30, 56a-c) nach einem der Ansprüche 1 bis 10 aufweist.

**12.** Batteriepack nach Anspruch 11,
**dadurch gekennzeichnet, dass**
das Batteriepackgehäuse (4, 52) zumindest teilweise ein Elastizitätsmodul von maximal 80.000 $N/mm^2$, vorzugsweise von maximal 30.000 $N/mm^2$ aufweist.

**13.** Batteriepack nach einem der Ansprüche 11 oder 12,
**dadurch gekennzeichnet, dass**
das Batteriepack (2, 50) im Batteriepackinnenraum (6, 54) mindestens auf einer Seite des Batteriemoduls (8a-f, 30, 56a-c) einen Ausweichbereich (58) aufweist, so dass das Batteriemodul (8a-f, 30, 56a-c) auf dieser Seite von dem Batteriepackgehäuse (4, 52) und anderen Batteriemodulen (8a-f, 30, 56a-c) im Batteriepack (2, 50) beabstandet ist.

**14.** Batteriepack nach einem der Ansprüche 11 bis 13,
**dadurch gekennzeichnet, dass**
das Batteriepackgehäuses (4, 52) ein Polycarbonatmaterial umfasst,
welches eine Polycarbonatzusammensetzung ist, welche die nachfolgenden Komponenten A + B + C oder A + B* + C sowie jeweils optional die Komponenten D, E und/oder F mit den jeweils angegebenen Anteilen enthält:

A) 70,0 bis 90,0 Gew.-Teile (bezogen auf die Summe der Gew.-Teile der Komponenten A + B + C bzw. A + B* + C) lineares und/ oder verzweigtes aromatisches Polycarbonat und/oder aromatisches Polyestercarbonat,
B) 6,0 bis 15,0 Gew.-Teile (bezogen auf die Summe der Gew.-Teile der Komponenten A + B+ C) mindestens eines Pfropfpolymerisats mit

B.1) 5 bis 40 Gew.-%, vorzugsweise 5 bis 30 Gew.-%, besonders bevorzugt 10 bis 20 Gew.-% (jeweils bezogen auf das Pfropfpolymerisat B) einer Hülle aus mindestens einem Vinylmonomeren und
B.2) 95 bis 60 Gew.-%, vorzugsweise 95 bis 70 Gew.-%, besonders bevorzugt 80 bis 90 Gew.-% (jeweils bezogen auf das Pfropfpolymerisat B) einer oder mehrerer Pfropfgrundlagen aus Silikon-Acrylat-Kompositkautschuk,

B*) 6,0 bis 15,0 Gew.-Teile (bezogen auf die Summe der Gew.-Teile der Komponenten A + B* + C) mindestens eines Pfropfpolymerisats mit

B*.1) 5 bis 95, vorzugsweise 30 bis 80 Gew.-Teile, einer Mischung aus

B*.1.1) 50 bis 95 Gew.-Teilen Styrol, α-Methylstyrol, methylkernsubstituiertem Styrol, C1-C8-Alkylmethacrylat, insbesondere Methylmethacrylat, C1-C8-Alkylacrylat, insbesondere Methylacrylat, oder Mischungen dieser Verbindungen und
B*.1.2) 5 bis 50 Gew.-Teilen Acrylnitril, Methacrylnitril C1-C8-Alkylmethacrylaten, insbesondere Methylmethacrylat, C1-C8-Alkylacrylat, insbesondere Methylacrylat, Maleinsäureanhydrid, C1-C4-alkyl-

bzw. -phenyl-N-substituierte Maleinimide oder Mischungen dieser Verbindungen auf

B*.2) 5 bis 95, vorzugsweise 20 bis 70 Gew.-Teilen einer kautschukhaltigen Pfropfgrundlage auf Butadien- oder Acrylatbasis,

C) 2,0 bis 15,0 Gew.-Teile (bezogen auf die Summe der Gew.-Teile der Komponenten A + B+ C bzw. A + B* + C) Phosphorverbindungen ausgewählt aus den Gruppen der Mono- und oligomeren Phosphor- und Phosphonsäureester, Phosphonatamine, Phosphazene und Phosphinate, sowie Mischungen dieser Verbindungen,
D) 0 bis 3,0 Gew.-Teile (bezogen auf die Summe der Gew.-Teile der Komponenten A + B+ C bzw. A + B* + C) Antitropfmittel,
E) 0 - 3,0 Gew.-Teile (bezogen auf die Summe der Gew.-Teile der Komponenten A + B+ C bzw. A + B* + C) thermoplastische Vinyl(Co)Polymerisat (E.1) und/oder Polyalkylenterephthalat (E.2), und
F) 0 bis 20,0 Gew.-Teile (bezogen auf die Summe der Gew.-Teile der Komponenten A + B+ C bzw. A + B* + C) weitere Zusatzstoffe,

wobei die Zusammensetzung vorzugsweise frei ist von kautschukfreiem Polyalkyl(alkyl)acrylat, und wobei alle Gewichtsteilangaben in der vorliegenden Anmeldung so normiert sind, dass die Summe der Gewichtsteile der Komponenten A+B+C bzw. A+B*+C in der Zusammensetzung 100 ergeben.

**15.** Elektrofahrzeug,
**dadurch gekennzeichnet, dass**
das Elektrofahrzeug ein Batteriemodul (8a-f, 30, 56a-c) nach einem der Ansprüche 1 bis 10 und/oder ein Batteriepack (2, 50) nach einem der Ansprüche 11 bis 14 aufweist.

## Claims

**1.** Battery module (8a-f, 30, 56a-c),

- having a battery module housing (10a, 32),
- wherein the battery module housing (10a, 32) encloses a battery module compartment (12a) and
- wherein the battery module housing (10a, 32) has on the battery module compartment side receivers (34a-b) for a specified number of battery cells (14, 36a-b),

**characterised in that**
- the battery module (8a-f, 30, 56a-c) has in the battery module compartment (12a), in addition to the receivers (34a-b), an escape area (16) which is of such a size and is so arranged that at least one battery cell (14, 36a-b) received in a receiver is displaceable at least partially into the escape area (16),
wherein
the battery module housing (10a, 32) comprises a polycarbonate material which is a polycarbonate composition which comprises the following components A + B + C or A + B* + C and in each case optionally components D, E and/or F in the amounts indicated in each case:

A) from 70.0 to 90.0 parts by weight (based on the sum of the parts by weight of components A + B + C or A + B* + C) of linear and/or branched aromatic polycarbonate and/or aromatic polyester carbonate,
B) from 6.0 to 15.0 parts by weight (based on the sum of the parts by weight of components A + B + C) of at least one graft polymer having

B.1) from 5 to 40 wt.%, preferably from 5 to 30 wt.%, particularly preferably from 10 to 20 wt.% (in each case based on the graft polymer B) of a shell of at least one vinyl monomer, and
B.2) from 95 to 60 wt.%, preferably from 95 to 70 wt.%, particularly preferably from 80 to 90 wt.% (in each case based on the graft polymer B) of one or more graft bases of silicone-acrylate composite rubber,

B*) from 6.0 to 15.0 parts by weight (based on the sum of the parts by weight of components A + B* + C) of at least one graft polymer having

B*.1) from 5 to 95 parts by weight, preferably from 30 to 80 parts by weight, of a mixture of

B*.1.1) from 50 to 95 parts by weight of styrene, $\alpha$-methylstyrene, styrene methyl-substituted on the ring, C1-C8-alkyl methacrylate, in particular methyl methacrylate, C1-C8-alkyl acrylate, in particular methyl acrylate, or mixtures of these compounds, and

B*.1.2) from 5 to 50 parts by weight of acrylonitrile, methacrylonitrile, C1-C8-alkyl methacrylates, in particular methyl methacrylate, C1-C8-alkyl acrylate, in particular methyl acrylate, maleic anhydride, C1-C4-alkyl- or - phenyl-N-substituted maleimides or mixtures of these compounds on

B*.2) from 5 to 95 parts by weight, preferably from 20 to 70 parts by weight, of a rubber-containing graft base based on butadiene or acrylate,

C) from 2.0 to 15.0 parts by weight (based on the sum of the parts by weight of components A + B + C or A + B* + C) of phosphorus compounds selected from the groups of the monomeric and oligomeric phosphoric and phosphonic acid esters, phosphonate amines, phosphazenes and phosphinates, as well as mixtures of these compounds,

D) from 0 to 3.0 parts by weight (based on the sum of the parts by weight of components A + B + C or A + B* + C) of antidripping agents,

E) from 0 to 3.0 parts by weight (based on the sum of the parts by weight of components A + B + C or A + B* + C) of thermoplastic vinyl (co)polymer (E.1) and/or polyalkylene terephthalate (E.2), and

F) from 0 to 20.0 parts by weight (based on the sum of the parts by weight of components A + B + C or A + B* + C) of further additives,

wherein the composition is preferably free of rubber-free polyalkyl (alkyl)acrylate, and wherein all part by weight data in the present application are so normalised that the sum of the parts by weight of components A+B+C or A+B*+C in the composition is 100.

**2.** Battery module according to Claim 1,
**characterised in that**
the battery module housing (10a, 32) is at least partially resilient, preferably having a modulus of elasticity of not more than 80,000 $N/mm^2$, in particular of not more than 30,000 $N/mm^2$.

**3.** Battery module according to Claim 1 or 2,
**characterised in that**
the battery module housing (10a, 32) has at least partially a normalised rigidity of less than 50,000 $Nmm^2$, in particular less than 25,000 $Nmm^2$.

**4.** Battery module according to any one of Claims 1 to 3,
**characterised in that**
a resilient element (18), in particular a resilient foam or a spring element, is arranged in the escape area (16).

**5.** Battery module according to Claim 4,
**characterised in that**
the resilient element (18) is connected to the battery module housing (10a, 32) by a form-, force- and/or material-based connection.

**6.** Battery module according to Claim 5,
**characterised in that**
the resilient element (18) is injection moulded with the battery module housing (10a, 32).

**7.** Battery module according to any one of Claims 1 to 6,
**characterised in that**
at least one receiver (34a-b) for a battery cell (14, 36a-b) is formed at least partially by a depression (34a-b) in the battery module housing (10a, 32).

**8.** Battery module according to any one of Claims 1 to 7,
**characterised in that**
at least one receiver (34a-b) for a battery cell (14, 36a-b) is formed at least partially by a collar element (38a-b) fixed to the battery module housing (10a, 32).

**9.** Battery module according to any one of Claims 1 to 8,
**characterised in that**
the battery module housing (10a, 32) and/or a resilient element (18) arranged in the escape area (16) comprises a flame-retardant material, in particular a flame-retardant plastic.

**10.** Battery module according to any one of Claims 1 to 9,
**characterised in that**
the battery module (8a-f, 30, 56a-c) comprises the specified number of battery cells (14, 36a-b), wherein the individual battery cells (14, 36a-b) are received in the receivers.

**11.** Battery pack (2, 50),

- having a battery pack housing (4, 52),
- wherein the battery pack housing (4, 52) encloses a battery pack compartment (6, 54) and
- wherein the battery pack housing (4, 52) has on the battery pack compartment side at least one receiver for a battery module (8a-f, 30, 56a-c),

**characterised in that**
- the battery pack (2, 50) has a battery module (8a-f, 30, 56a-c) according to any one of Claims 1 to 10 received in the receiver.

**12.** Battery pack according to Claim 11,
**characterised in that**
the battery pack housing (4, 52) has at least partially a modulus of elasticity of not more than 80,000 $N/mm^2$, preferably of not more than 30,000 $N/mm^2$.

**13.** Battery pack according to either of Claims 11 and 12,
**characterised in that**
the battery pack (2, 50) has an escape area (58) in the battery pack compartment (6, 54) on at least one side of the battery module (8a-f, 30, 56a-c), so that the battery module (8a-f, 30, 56a-c) is spaced apart from the battery pack housing (4, 52) and other battery modules (8a-f, 30, 56a-c) in the battery pack (2, 50) on that side.

**14.** Battery pack according to any one of Claims 11 to 13,
**characterised in that**
the battery pack housing (4, 52) comprises a polycarbonate material which is a polycarbonate composition which comprises the following components A + B + C or A + B* + C and in each case optionally components D, E and/or F in the amounts indicated in each case:

A) from 70.0 to 90.0 parts by weight (based on the sum of the parts by weight of components A + B + C or A + B* + C) of linear and/or branched aromatic polycarbonate and/or aromatic polyester carbonate,
B) from 6.0 to 15.0 parts by weight (based on the sum of the parts by weight of components A + B + C) of at least one graft polymer having

B.1) from 5 to 40 wt.%, preferably from 5 to 30 wt.%, particularly preferably from 10 to 20 wt.% (in each case based on the graft polymer B) of a shell of at least one vinyl monomer, and
B.2) from 95 to 60 wt.%, preferably from 95 to 70 wt.%, particularly preferably from 80 to 90 wt.% (in each case based on the graft polymer B) of one or more graft bases of silicone-acrylate composite rubber,

B*) from 6.0 to 15.0 parts by weight (based on the sum of the parts by weight of components A + B* + C) of at least one graft polymer having

B*.1) from 5 to 95 parts by weight, preferably from 30 to 80 parts by weight, of a mixture of

B*.1.1) from 50 to 95 parts by weight of styrene, α-methylstyrene, styrene methyl-substituted on the ring, C1-C8-alkyl methacrylate, in particular methyl methacrylate, C1-C8-alkyl acrylate, in particular methyl acrylate, or mixtures of these compounds, and
B*.1.2) from 5 to 50 parts by weight of acrylonitrile, methacrylonitrile, C1-C8-alkyl methacrylates, in particular methyl methacrylate, C1-C8-alkyl acrylate, in particular methyl acrylate, maleic anhydride, C1-C4-alkyl- or - phenyl-N-substituted maleimides or mixtures of these compounds on

B*.2) from 5 to 95 parts by weight, preferably from 20 to 70 parts by weight, of a rubber-containing graft base based on butadiene or acrylate,

C) from 2.0 to 15.0 parts by weight (based on the sum of the parts by weight of components A + B + C or A + B* + C) of phosphorus compounds selected from the groups of the monomeric and oligomeric phosphoric and phosphonic acid esters, phosphonate amines, phosphazenes and phosphinates, as well as mixtures of these compounds,
D) from 0 to 3.0 parts by weight (based on the sum of the parts by weight of components A + B + C or A + B* + C) of antidripping agents,
E) from 0 to 3.0 parts by weight (based on the sum of the parts by weight of components A + B + C or A + B* + C) of thermoplastic vinyl (co)polymer (E.1) and/or polyalkylene terephthalate (E.2), and
F) from 0 to 20.0 parts by weight (based on the sum of the parts by weight of components A + B + C or A + B* + C) of further additives,

wherein the composition is preferably free of rubber-free polyalkyl (alkyl)acrylate, and wherein all part by weight data in the present application are so normalised that the sum of the parts by weight of components A+B+C or A+B*+C in the composition is 100.

**15.** Electric vehicle,
**characterised in that**
the electric vehicle has a battery module (8a-f, 30, 56a-c) according to any one of Claims 1 to 10 and/or a battery pack (2, 50) according to any one of Claims 11 to 14.

## Revendications

**1.** Module de batterie (8a-f, 30, 56a-c),

- comprenant un boîtier de module de batterie (10a, 32),
- le boîtier de module de batterie (10a, 32) entourant un espace intérieur de module de batterie (12a) et
- le boîtier de module de batterie (10a, 32) comprenant, dans l'espace intérieur du module de batterie, des logements (34a-b) destinés à un nombre prédéfini de cellules de batterie (14, 36a-b), **caractérisé en ce que**
- le module de batterie (8a-f, 30, 56a-c) comprend dans l'espace intérieur de module de batterie (12a) en plus des logements (34a-b) une zone de déport (16) qui est dimensionnée et agencée de telle sorte qu'au moins une cellule de batterie (14, 36a-b) logée dans un logement puisse être déplacée par coulissement au moins en partie dans la zone de déport (16),

le boîtier de module de batterie (10a, 32) comprenant un matériau de polycarbonate, qui est une composition de polycarbonate qui contient les composants A + B +C ou A + B* + C suivants, ainsi qu'éventuellement les composants D, E et/ou F en les proportions indiquées à chaque fois :

A) 70,0 à 90,0 parties en poids (par rapport à la somme des parties en poids des composants A + B + C ou A + B* + C) d'un polycarbonate aromatique linéaire et/ou ramifié et/ou d'un polyester-carbonate aromatique,
B) 6,0 à 15,0 parties en poids (par rapport à la somme des parties en poids des composants A + B + C) d'au moins un polymère greffé comprenant :

B.1) 5 à 40 % en poids, de préférence 5 à 30 % en poids, de manière particulièrement préférée 10 à 20 % en poids (à chaque fois par rapport au polymère greffé B) d'une enveloppe en au moins un monomère de vinyle, et
B.2) 95 à 60 % en poids, de préférence 95 à 70 % en poids, de manière particulièrement préférée 80 à 90 % en poids (à chaque fois par rapport au polymère greffé B) d'une ou de plusieurs bases de greffage en un caoutchouc composite silicone-acrylate,

B*) 6,0 à 15,0 parties en poids (par rapport à la somme des parties en poids des composants A + B* + C) d'au moins un polymère greffé comprenant :

B*.1) 5 à 95, de préférence 30 à 80 parties en poids, d'un mélange de :

B*.1.1) 50 à 95 parties en poids de styrène, d'a-méthylstyrène, de styrène à substitution méthyle sur le noyau, de méthacrylate d'alkyle en C1-C8, notamment de méthacrylate de méthyle, d'acrylate d'alkyle en C1-C8, notamment d'acrylate de méthyle, ou de mélanges de ces composés, et
B*.1.2) 5 à 50 parties en poids d'acrylonitrile, de méthacrylonitrile, de méthacrylates d'alkyle en C1-C8, notamment de méthacrylate de méthyle, d'acrylate d'alkyle en C1-C8, notamment d'acrylate de méthyle, d'anhydride de l'acide maléique, de maléinimides N-substitués par alkyle en C1-C4 ou phényle, ou de mélanges de ces composés, sur

B*.2) 5 à 95, de préférence 20 à 70 parties en poids d'une base de greffage contenant du caoutchouc à base de butadiène ou d'acrylate,

C) 2,0 à 15,0 parties en poids (par rapport à la somme des parties en poids des composants A + B + C ou A + B* + C) de composés de phosphore choisis dans le groupe constitué par les esters de l'acide phosphorique et phosphonique mono- et oligomères, les phosphonate-amines, les phosphazènes et les phosphinates, ainsi que les mélanges de ces composés,
D) 0 à 3,0 parties en poids (par rapport à la somme des parties en poids des composants A + B + C ou A + B* + C) d'agents anti-égouttement,
E) 0 à 3,0 parties en poids (par rapport à la somme des parties en poids des composants A + B + C ou A + B* + C) d'un (co)polymère de vinyle thermoplastique (E.1) et/ou de polyalkylène téréphtalate (E.2), et
F) 0 à 20,0 parties en poids (par rapport à la somme des parties en poids des composants A + B + C ou A + B* + C) d'additifs supplémentaires,

la composition étant de préférence exempte de polyacrylate d'alkyl(alkyle) sans caoutchouc, et toutes les indications de parties en poids dans la présente demande étant normées de telle sorte que la somme des parties en poids des composants A+B+C ou A+B*+C dans la composition soit de 100.

**2.** Module de batterie selon la revendication 1, **caractérisé en ce que** le boîtier de module de batterie (10a, 32) est configuré sous forme au moins partiellement élastique, de préférence avec un module d'élasticité d'au plus 80 000 $N/mm^2$, notamment d'au plus 30 000 $N/mm^2$.

**3.** Module de batterie selon la revendication 1 ou 2, **caractérisé en ce que** le boîtier de module de batterie (10a, 32) présente au moins en partie une rigidité normée inférieure à 50 000 $Nmm^2$, notamment inférieure à 25 000 $Nmm^2$.

**4.** Module de batterie selon l'une quelconque des revendications 1 à 3, **caractérisé en ce qu'**un élément élastique (18), notamment une mousse élastique ou un élément à ressort, est agencé dans la zone de déport (16).

**5.** Module de batterie selon la revendication 4, **caractérisé en ce que** l'élément élastique (18) est relié par complémentarité de forme, par force et/ou par accouplement de matières avec le boîtier de module de batterie (10a, 32).

**6.** Module de batterie selon la revendication 5, **caractérisé en ce que** l'élément élastique (18) est extrudé avec le boîtier de module de batterie (10a, 32).

**7.** Module de batterie selon l'une quelconque des revendications 1 à 6, **caractérisé en ce qu'**au moins un logement (34a-b) pour une cellule de batterie (14, 36a-b) est au moins partiellement formé par un creux (34a-b) dans le boîtier de module de batterie (10a, 32).

**8.** Module de batterie selon l'une quelconque des revendications 1 à 7, **caractérisé en ce qu'**au moins un logement (34a-b) pour une cellule de batterie (14, 36a-b) est au moins partiellement formé par un élément de col (38a-b) fixé sur le boîtier de module de batterie (10a, 32).

**9.** Module de batterie selon l'une quelconque des revendications 1 à 8, **caractérisé en ce que** le boîtier de module de batterie (10a, 32) et/ou un élément élastique (18) agencé dans la zone de déport (16) comprend un matériau ignifugé, notamment un plastique ignifugé.

**10.** Module de batterie selon l'une quelconque des revendications 1 à 9, **caractérisé en ce que** le module de batterie (8a-f, 30, 56a-c) comprend le nombre prédéfini de cellules de batterie (14, 36a-b), les cellules de batterie individuelles (14, 36a-b) étant logées dans les logements.

**11.** Bloc de batterie (2, 50),

- comprenant un boîtier de bloc de batterie (4, 52),
- le boîtier de bloc de batterie (4, 52) entourant un espace intérieur de bloc de batterie (6, 54) et
- le boîtier de bloc de batterie (4, 52) comprenant, dans l'espace intérieur de bloc de batterie, au moins un logement destiné à un module de batterie (8a-f, 30, 56a-c),

**caractérisé en ce que**

- le bloc de batterie (2, 50) comprend un module de batterie (8a-f, 30, 56a-c) selon l'une quelconque des revendications 1 à 10 logé dans le logement.

**12.** Bloc de batterie selon la revendication 11, **caractérisé en ce que** le boîtier de bloc de batterie (4, 52) présente au moins en partie un module d'élasticité d'au plus 80 000 N/$mm^2$, de préférence d'au plus 30 000 N/$mm^2$.

**13.** Bloc de batterie selon l'une quelconque des revendications 11 ou 12, **caractérisé en ce que** le bloc de batterie (2, 50) comprend dans l'espace intérieur de bloc de batterie (6, 54) au moins sur un côté du module de batterie (8a-f, 30, 56a-c) une zone de déport (58), de telle sorte que le module de batterie (8a-f, 30, 56a-c) soit espacé sur ce côté du boîtier de bloc de batterie (4, 52) et d'autres modules de batterie (8a-f, 30, 56a-c) dans le bloc de batterie (2, 50).

**14.** Bloc de batterie selon l'une quelconque des revendications 11 à 13, **caractérisé en ce que** le boîtier de bloc de batterie (4, 52) comprend un matériau de polycarbonate, qui est une composition de polycarbonate qui contient les composants A + B + C ou A + B* + C suivants, ainsi qu'éventuellement les composants D, E et/ou F en les proportions indiquées à chaque fois :

A) 70,0 à 90,0 parties en poids (par rapport à la somme des parties en poids des composants A + B + C ou A + B* + C) d'un polycarbonate aromatique linéaire et/ou ramifié et/ou d'un polyester-carbonate aromatique,
B) 6,0 à 15,0 parties en poids (par rapport à la somme des parties en poids des composants A + B + C) d'au moins un polymère greffé comprenant :

B.1) 5 à 40 % en poids, de préférence 5 à 30 % en poids, de manière particulièrement préférée 10 à 20 % en poids (à chaque fois par rapport au polymère greffé B) d'une enveloppe en au moins un monomère de vinyle, et
B.2) 95 à 60 % en poids, de préférence 95 à 70 % en poids, de manière particulièrement préférée 80 à 90 % en poids (à chaque fois par rapport au polymère greffé B) d'une ou de plusieurs bases de greffage en un caoutchouc composite silicone-acrylate,

B*) 6,0 à 15,0 parties en poids (par rapport à la somme des parties en poids des composants A + B* + C) d'au moins un polymère greffé comprenant :

B*.1) 5 à 95, de préférence 30 à 80 parties en poids, d'un mélange de :

B*.1.1) 50 à 95 parties en poids de styrène, d'$\alpha$-méthylstyrène, de styrène à substitution méthyle sur le noyau, de méthacrylate d'alkyle en C1-C8, notamment de méthacrylate de méthyle, d'acrylate d'alkyle en C1-C8, notamment d'acrylate de méthyle, ou de mélanges de ces composés, et
B*.1.2) 5 à 50 parties en poids d'acrylonitrile, de méthacrylonitrile, de méthacrylates d'alkyle en C1-C8, notamment de méthacrylate de méthyle, d'acrylate d'alkyle en C1-C8, notamment d'acrylate de méthyle, d'anhydride de l'acide maléique, de maléinimides N-substitués par alkyle en C1-C4 ou phényle, ou de mélanges de ces composés, sur

B*.2) 5 à 95, de préférence 20 à 70 parties en poids d'une base de greffage contenant du caoutchouc à base de butadiène ou d'acrylate,

C) 2,0 à 15,0 parties en poids (par rapport à la somme des parties en poids des composants A + B + C ou A + B* + C) de composés de phosphore choisis dans le groupe constitué par les esters de l'acide phosphorique et phosphonique mono- et oligomères, les phosphonate-amines, les phosphazènes et les phosphinates, ainsi que les mélanges de ces composés,
D) 0 à 3,0 parties en poids (par rapport à la somme des parties en poids des composants A + B + C ou A + B* + C) d'agents anti-égouttement,
E) 0 à 3,0 parties en poids (par rapport à la somme des parties en poids des composants A + B + C ou A + B*

+ C) d'un (co)polymère de vinyle thermoplastique (E.1) et/ou de polyalkylène téréphtalate (E.2), et
F) 0 à 20,0 parties en poids (par rapport à la somme des parties en poids des composants A + B + C ou A + B* + C) d'additifs supplémentaires,

la composition étant de préférence exempte de polyacrylate d'alkyl(alkyle) sans caoutchouc, et toutes les indications de parties en poids dans la présente demande étant normées de telle sorte que la somme des parties en poids des composants A+B+C ou A+B*+C dans la composition soit de 100.

**15.** Véhicule électrique, **caractérisé en ce que** le véhicule électrique comprend un module de batterie (8a-f, 30, 56a-c) selon l'une quelconque des revendications 1 à 10 et/ou un bloc de batterie (2, 50) selon l'une quelconque des revendications 11 à 14.

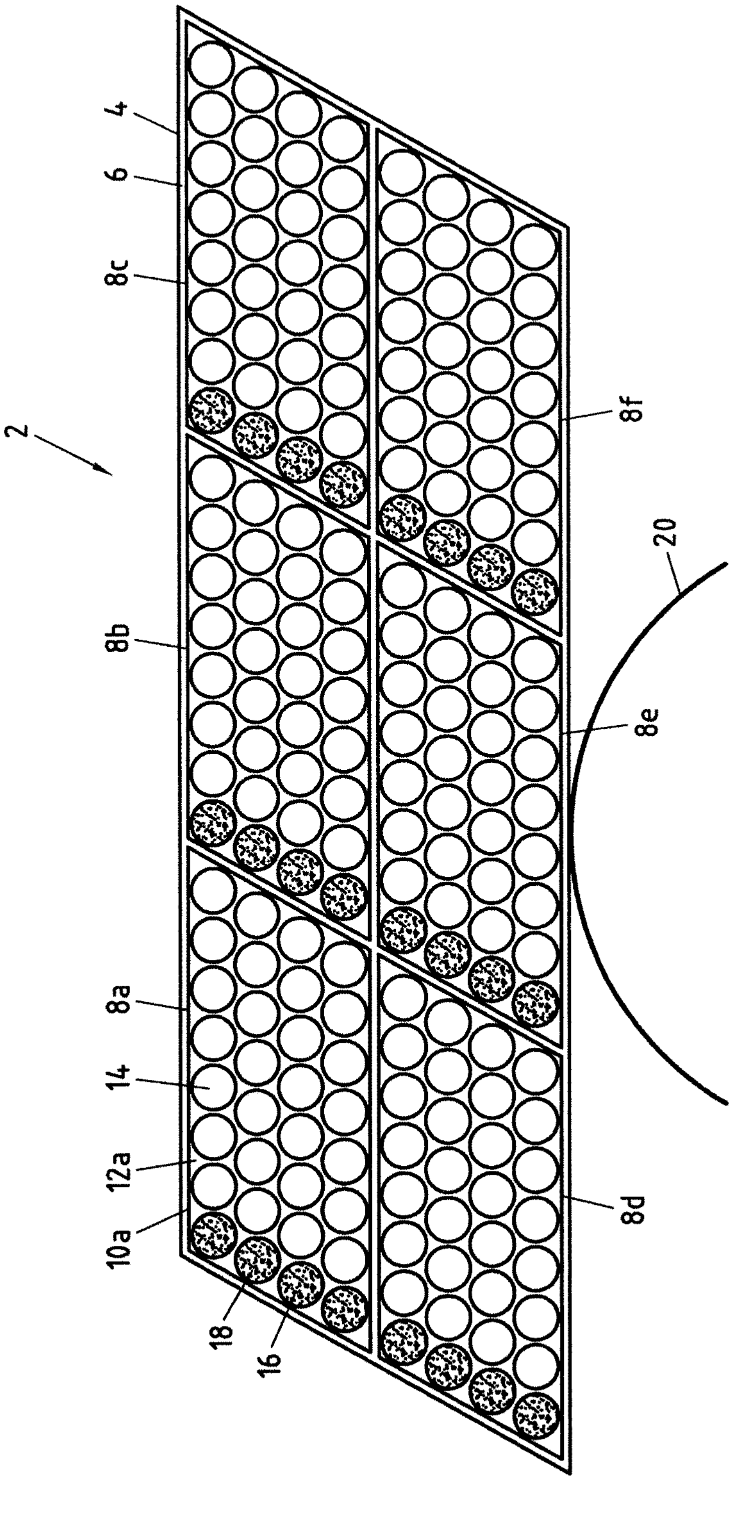


Fig.1

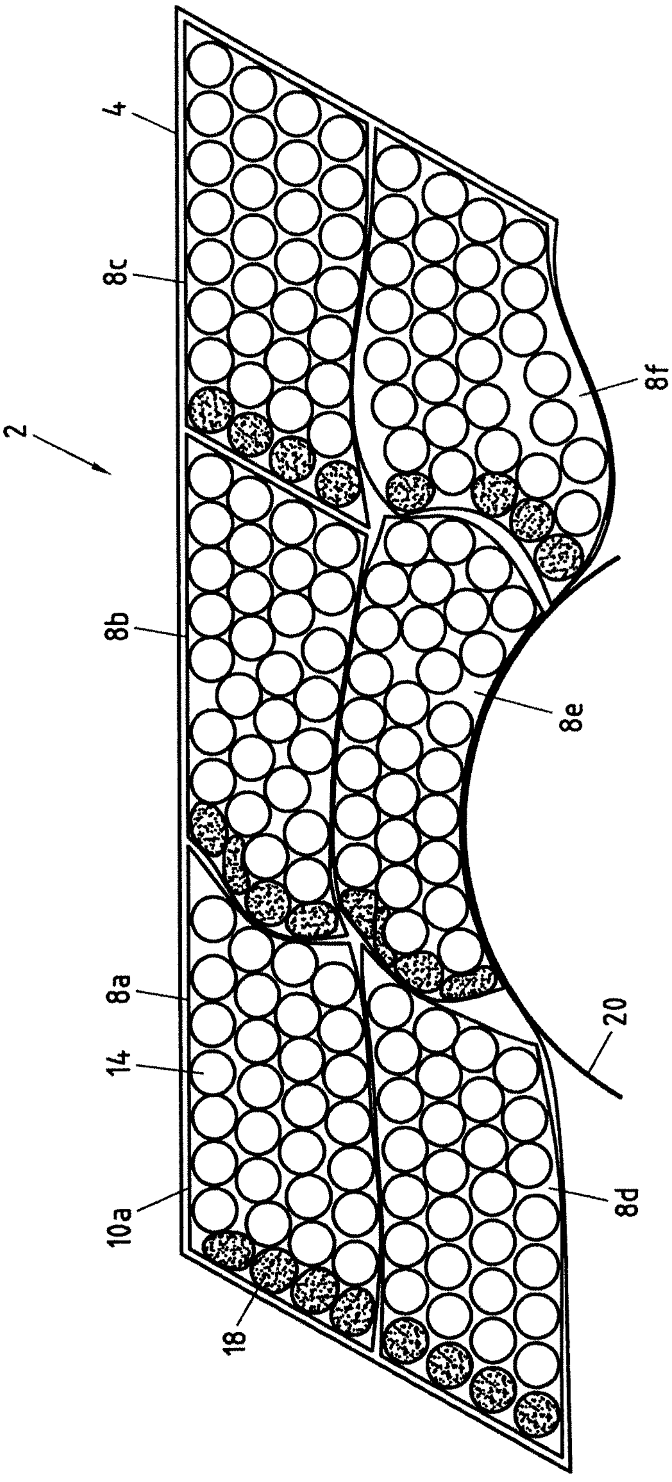


Fig.2

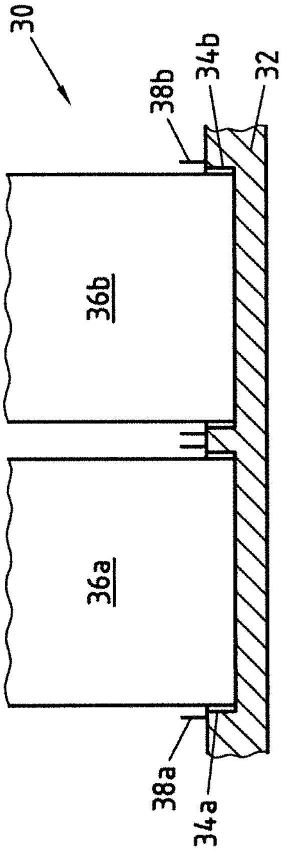


Fig.3

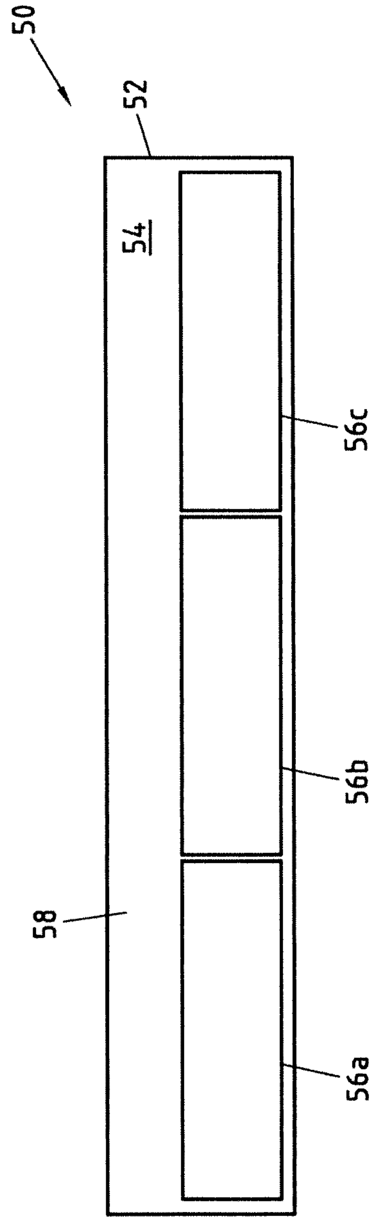


Fig.4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102009007422 A1
- DE AS1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- US 5807914 A
- EP 430134 A
- US 4888388 A
- US 2891920 A
- US 3294725 A
- DE OS3631540 A
- EP 249964 A
- DE OS1694173 A
- US PS3564077 A
- DE OS2348377 A
- US PS3919353 A
- EP 0363608 A
- EP 0640655 A
- WO 0000541 A
- WO 0118105 A
- EP 640655 A
- DE 2407674 A
- DE 2407776
- DE 2715932
- DE 1900270 A
- US PS3692744 A


### In der Beschreibung aufgeführte Nicht-Patentliteratur


- **W. SCHOLTAN ; H. LANGE.** *Kolloid-Z. und Z. Polymere,* 1972, vol. 250, 782-796
- **HOUBEN-WEYL.** Methoden der Organischen Chemie. Georg Thieme-Verlag, 1961, vol. 14/1, 393-406
- **C.B. BUCKNALL.** Toughened Plastics. Appl. Science Publishers, 1977
- **M. HOFFMANN ; H. KRÖMER ; R. KUHN.** Polymeranalytik I und II. Georg Thieme-Verlag, 1977
- **W. SCHOLTAN ; H. LANGE.** *Kolloid, Z. und Z. Polymere,* 1972, vol. 250, 782-796
- Ullmanns Enzyklopädie der technischen Chemie. 1979, vol. 18, 301 ff
- *Houben-Weyl, Methoden der organischen Chemie,* vol. 12/1, 43
- Kunststoff-Handbuch. Carl-Hanser-Verlag, 1973, vol. VIII, 695 ff